(19) Europäisches Patentamt
European Patent Office
Office européen des brevets

(11) **EP 4 664 174 A1**

(12) **EUROPEAN PATENT APPLICATION**
published in accordance with Art. 153(4) EPC

(43) Date of publication:
**17.12.2025 Bulletin 2025/51**

(21) Application number: **24788898.5**

(22) Date of filing: **04.03.2024**

(51) International Patent Classification (IPC):
**G02B 13/00** $^{(2006.01)}$  **G02B 9/60** $^{(2006.01)}$
**G02B 1/04** $^{(2006.01)}$  **G03B 5/04** $^{(2021.01)}$
**G03B 13/36** $^{(2021.01)}$  **H04N 23/55** $^{(2023.01)}$
**G02B 3/00** $^{(2006.01)}$

(52) Cooperative Patent Classification (CPC):
**G02B 1/04; G02B 3/00; G02B 9/60; G02B 13/00;
G03B 5/04; G03B 13/36; H04N 23/55**

(86) International application number:
**PCT/KR2024/002750**

(87) International publication number:
**WO 2024/214954 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023  KR 20230048757
28.04.2023  KR 20230056313**

(71) Applicant: **Samsung Electronics Co., Ltd.
Suwon-si, Gyeonggi-do 16677 (KR)**

(72) Inventors:
• **KIM, Moonjoon**
  **Suwon-si Gyeonggi-do 16677 (KR)**
• **KIM, Dongwoo**
  **Suwon-si Gyeonggi-do 16677 (KR)**
• **KIM, Hyunjea**
  **Suwon-si Gyeonggi-do 16677 (KR)**

(74) Representative: **HGF
HGF Limited
4th Floor, 1 City Square
Leeds LS1 2AL (GB)**

(54) **LENS ASSEMBLY AND ELECTRONIC DEVICE COMPRISING SAME**

(57)     A lens assembly according to one embodiment of the present disclosure may comprise: an image sensor; a first lens firstly arranged from a subject side so as to be aligned with the image sensor at an optical axis, the first lens having a negative refractive power and including a concave subject-side surface and a convex image-sensor-side surface; a second lens arranged between the first lens and the image sensor so as to be aligned at the optical axis, the second lens having a positive refractive power and including a convex subject-side surface and a convex image-sensor-side surface; a third lens arranged between the second lens and the image sensor so as to be aligned at the optical axis, the third lens having a negative refractive power and including a convex subject-side surface and a concave image-sensor-side surface; a fourth lens arranged between the third lens and the image sensor so as to be aligned at the optical axis, the fourth lens having a positive refractive power and including a concave subject-side surface and a convex image-sensor-side surface; and a fifth lens arranged between the fourth lens and the image sensor so as to be aligned at the optical axis, the fifth lens having a negative refractive power and including a convex subject-side surface and a concave image-sensor side surface. In one embodiment, the lens assembly satisfies at least some of the disclosed conditions about shape, refractive power, whole lens length, image height, angle of view, and the thickness and/or arrangement of a third lens (L3), and thus can be easily miniaturized. Other various embodiments are possible.

FIG. 5

**Description**

[Technical Field]

Embodiment(s) of the disclosure relate to a lens assembly, for example, a lens assembly including a plurality of lenses and an electronic device including the same.

[Background Art]

Optical devices, for example, cameras capable of capturing images or videos have been widely used, and digital cameras or video cameras with solid-state image sensors such as charge-coupled devices (CCDs) or complementary metal-oxide semiconductors (CMOS) have become common in recent years. Optical devices with solid-state image sensors (CCDs or CMOSs) have been gradually replacing film-based optical devices because they allow for easier storage, duplication, and movement of images than the film-based optical devices.

A plurality of optical devices, for example, two or more selected from a macro camera, a telephoto camera, and/or a wide-angle camera, have recently been mounted in a single electronic device to enhance the quality of captured images and to impart various visual effects to the captured images. For example, object images may be obtained through a plurality of cameras having different optical characteristics and synthesized into a high-quality captured image. As electronic devices such as mobile communication terminals and smartphones are equipped with a plurality of optical devices (e.g., cameras) to obtain high-quality captured images, these electronic devices are gradually replacing electronic devices specialized for shooting functions, such as digital compact cameras, and are expected to potentially replace high-performance cameras such as digital single-lens reflex cameras (DSLRs) in the future.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, a lens assembly includes an image sensor, a first lens disposed first from an object side and aligned with the image sensor on an optical axis, wherein the first lens has a negative refractive power and includes a concave object-side surface and a convex image sensor-side surface, a second lens disposed between the first lens and the image sensor and aligned with the optical axis, wherein the second lens has a positive refractive power and includes a convex object-side surface and a convex image sensor-side surface, a third lens disposed between the second lens and the image sensor and aligned with the optical axis, wherein the third lens has a negative refractive power and includes a convex object-side surface and a concave image sensor-side surface, a fourth lens disposed between the third lens and the image sensor and aligned with the optical axis, wherein the fourth lens has a positive refractive power and includes a concave object-side surface and a convex image sensor-side surface, and a fifth lens disposed between the fourth lens and the image sensor and aligned with the optical axis, wherein the fifth lens has a negative refractive power and includes a convex object-side surface and a concave image sensor-side surface. In an embodiment, the lens assembly may satisfy the following [Conditional Expressions 1, 2, 3, and 4].

$$[\text{Conditional Expression 1}]$$

$$123 <= FOV$$

$$[\text{Conditional Expression 2}]$$

$$Fno <= 2.3$$

$$[\text{Conditional Expression 3}]$$

$$TTL/(IH*2) <= 1.0$$

[Conditional Expression 4]

$$EFL/(IH*2) <= 0.33$$

Herein, 'FOV' may be a field of view of the lens assembly, 'Fno' may be an F-number of the lens assembly, 'TTL' may be a distance from the object-side surface of the first lens to an imaging plane of the image sensor, measured along the optical axis, 'IH' may be an image height of the image sensor, and 'EFL' may be an effective focal length of the lens assembly.

According to an embodiment of the disclosure, a lens assembly includes an image sensor, a first lens disposed first from an object side and aligned with the image sensor on an optical axis, wherein the first lens has a negative refractive power and includes a concave object-side surface and a concave image sensor-side surface, a second lens disposed between the first lens and the image sensor and aligned with the optical axis, wherein the second lens has a positive refractive power and includes a convex object-side surface and a convex image sensor-side surface, a third lens disposed between the second lens and the image sensor and aligned with the optical axis, wherein the third lens has a negative refractive power and includes a convex object-side surface and a concave image sensor-side surface, a fourth lens disposed between the third lens and the image sensor and aligned with the optical axis, wherein the fourth lens has a positive refractive power and includes a convex object-side surface and a convex image sensor-side surface, and a fifth lens disposed between the fourth lens and the image sensor and aligned with the optical axis, wherein the fifth lens has a negative refractive power and includes a convex object-side surface and a concave image sensor-side surface. In an embodiment, the lens assembly may satisfy the following [Conditional Expressions 6, 2, and 3].

[Conditional Expression 6]

$$120 <= FOV$$

[Conditional Expression 2]

$$Fno <= 2.3$$

[Conditional Expression 3]

$$TTL/(IH*2) <= 1.0$$

Herein, 'FOV' may be a field of view of the lens assembly, 'Fno' may be an F-number of the lens assembly, 'TTL' may be a distance from the object-side surface of the first lens to an imaging plane of the image sensor, measured along the optical axis, and 'IH' may be an image height of the image sensor.

According to an embodiment of the disclosure, an electronic device includes the above-described lens assembly and a processor configured to obtain an object image using the lens assembly.

[Brief Description of Drawings]

The above or other aspects, features, and/or advantages of an embodiment of the disclosure may be apparent from the following detailed description taken in conjunction with the accompanying drawings.

FIG. 1 is a block diagram illustrating an electronic device in a network environment according to an embodiment of the disclosure.
FIG. 2 is a block diagram illustrating a camera module according to an embodiment of the disclosure.
FIG. 3 is a front perspective view illustrating an electronic device according to an embodiment of the disclosure.
FIG. 4 is a rear perspective view illustrating an electronic device according to an embodiment of the disclosure.
FIG. 5 is a diagram illustrating a lens assembly according to an embodiment of the disclosure.
FIG. 6 is a graph illustrating longitudinal spherical aberration of the lens assembly of FIG. 5 according to an embodiment of the disclosure.
FIG. 7 is a graph illustrating astigmatism of the lens assembly of FIG. 5 according to an embodiment of the disclosure.
FIG. 8 is a graph illustrating distortion of the lens assembly of FIG. 5 according to an embodiment of the disclosure.
FIG. 9 is a diagram illustrating a lens assembly according to an embodiment of the disclosure.
FIG. 10 is a graph illustrating longitudinal spherical aberration of the lens assembly of FIG. 9 according to an embodiment of the disclosure.

FIG. 11 is a graph illustrating astigmatism of the lens assembly of FIG. 9 according to an embodiment of the disclosure.

FIG. 12 is a graph illustrating distortion of the lens assembly of FIG. 9 according to an embodiment of the disclosure.

FIG. 13 is a diagram illustrating a lens assembly according to an embodiment of the disclosure.

FIG. 14 is a graph illustrating longitudinal spherical aberration of the lens assembly of FIG. 13 according to an embodiment of the disclosure.

FIG. 15 is a graph illustrating astigmatism of the lens assembly of FIG. 13 according to an embodiment of the disclosure.

FIG. 16 is a graph illustrating distortion of the lens assembly of FIG. 13 according to an embodiment of the disclosure.

FIG. 17 is a diagram illustrating a lens assembly according to an embodiment of the disclosure.

FIG. 18 is a graph illustrating longitudinal spherical aberration of the lens assembly of FIG. 17 according to an embodiment of the disclosure.

FIG. 19 is a graph illustrating astigmatism of the lens assembly of FIG. 17 according to an embodiment of the disclosure.

FIG. 20 is a graph illustrating distortion of the lens assembly of FIG. 17 according to an embodiment of the disclosure.

FIG. 21 is a diagram illustrating a lens assembly according to an embodiment of the disclosure.

FIG. 22 is a graph illustrating longitudinal spherical aberration of the lens assembly of FIG. 21 according to an embodiment of the disclosure.

FIG. 23 is a graph illustrating astigmatism of the lens assembly of FIG. 21 according to an embodiment of the disclosure.

FIG. 24 is a graph illustrating distortion of the lens assembly of FIG. 21 according to an embodiment of the disclosure.

Throughout the accompanying drawings, like reference numerals may be assigned to like parts, components, and/or structures.

[Mode for Carrying out the Invention]

As mentioned above, a miniaturized electronic device such as a smartphone may obtain a high-quality image by including a plurality of cameras or a plurality of lens assemblies. When arranging the plurality of cameras or the plurality of lens assemblies in the miniaturized electronic device, the camera(s) or lens assembly(s) may be miniaturized while maintaining stable optical performance (e.g., performance related to a field of view). However, as the electronic device becomes more miniaturized, it may become difficult to secure the optical performance of the camera(s) or lens assembly(s). For example, when the lens assembly has a total lens length enough to be easily mounted on the miniaturized electronic device, it may be difficult to implement a lens assembly with wide-angle characteristics.

To at least address the above problems and/or disadvantages and at least provide the advantages described below, an embodiment of the disclosure may provide a lens assembly miniaturized by having a small total lens length relative to an image height of an image sensor, and/or an electronic device including the same.

An embodiment of the disclosure may provide a lens assembly that is miniaturized while having wide-angle performance, and/or an electronic device including the same.

An embodiment of the disclosure may provide a lens assembly that is miniaturized while facilitating aberration control or easily securing a marginal light quantity ratio.

The technical objects to be achieved by the disclosure are not limited to those mentioned above, and other technical objects not mentioned will be clearly understood by those skilled in the art from the following description.

The following description of the accompanying drawings may provide an understanding of various exemplary implementations of the disclosure including the claims and their equivalents. The exemplary embodiments disclosed in the following description include various specific details to assist in understanding, but it is considered that they are merely one of various exemplary embodiments. Accordingly, those skilled in the art will understand that various changes and modifications may be made to various implementations of the disclosure without departing from the scope and spirit of the disclosure. In addition, a description of well-known functions and configurations will be avoided for clarity and conciseness.

The terms and words used in the following description and the claims are not limited to their dictionary meanings but are used to enable a clear and consistent understanding of an embodiment of the disclosure. Accordingly, it will be obvious to those skilled in the art that the following description of various implementations of the disclosure is provided for illustrative purposes only and not for the purpose of limiting the disclosure as defined by the appended claims and their equivalents.

It is to be understood that the singular forms "a," "an," and "the" are intended to include plural referents as well, unless the context clearly indicates otherwise. Thus, for example, reference to "a component surface" may include reference to one or more surfaces of a component.

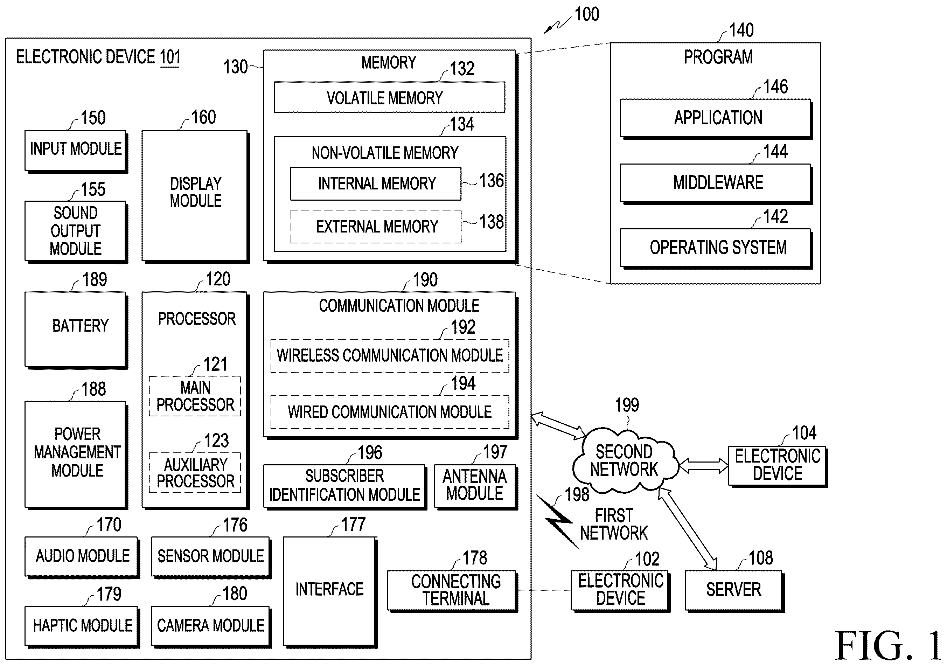

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

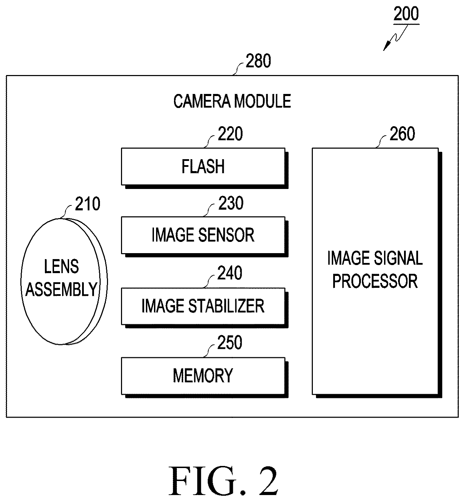

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 180 having different attributes or functions. In such a case, at least one of the plurality of camera modules 280 may form, for example, a wide-angle camera and at least another of the plurality of camera modules 180 may form a telephoto camera. Similarly, at least one of the plurality of camera modules 280 may form, for example, a front camera and at least another of the plurality of camera modules 180 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

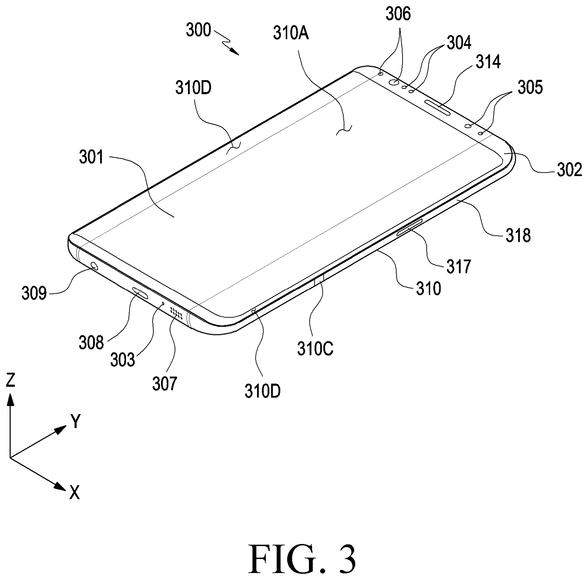

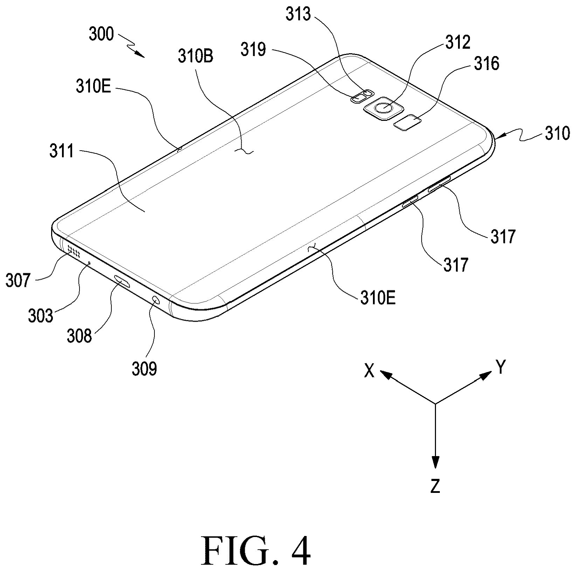

FIG. 3 is a front perspective view illustrating an electronic device 300 (e.g., the electronic device 101 of FIG. 1) according to an embodiment of the disclosure. FIG. 4 is a rear perspective view illustrating the electronic device 300 illustrated in FIG. 3 according to an embodiment of the disclosure.

Referring to FIGS. 3 and 4, the electronic device 300 (e.g., the electronic device 101 of FIG. 1) according to an embodiment may include a housing 310 which includes a first surface (front surface) 310A, a second surface (rear surface) 310B, and a side surface 310C surrounding a space between the first surface 310A and the second surface 310B. In an embodiment (not shown), the housing 310 may refer to a structure that forms a portion of the first surface 310A of FIG. 3, the second surface 310B of FIG. 4, and the side surfaces 310C. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an internal space together with the housing 310. In an embodiment, the term 'internal space' may refer to an internal space of the housing 310 for accommodating at least a portion of a display 301 to be described later or the display module 160 of FIG. 1.

According to an embodiment, the second surface 310B may be formed by a rear plate 311. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In the embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, sensor modules 304, 316, and 319, camera modules 305, 312, and 313 (e.g., the camera module 180 or 280 in FIG. 1 or FIG. 2), key input devices 317, or connector holes 308 and 309. In an embodiment, the electronic device 300 may not be provided with at least one (e.g., the key input devices 317 or a light emitting element 306) of the components or may additionally include other components.

The display 301 (e.g., the display module 160 of FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of the screen display area (e.g., active area) or an area (e.g., inactive area) outside the screen display area, and at least one of the audio module 314 (e.g., the audio module 170 of FIG. 1), the sensor module 304 (the sensor module 176 of FIG. 1), the camera module 305, or the light emitting element 306, which is aligned with the recess or the opening, may be included. In an embodiment (not shown), at least one of the audio module 314, the sensor module 304, the camera modules 305 (e.g., under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state or external environmental state of the electronic device 300. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a front camera module 305 disposed on the first surface 310A of the electronic device 300, and a rear camera module 312 and/or a flash 313 disposed on the second surface 310B. The camera modules 305 and 312 may include one or more lenses, an image sensor, and/or an image signal processor. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

In describing the following embodiments, reference may be made to the electronic devices 101, 102, 104, and 300 and/or the camera modules 180, 280, 305, 312, and 313 of the above-described embodiments. Lens assemblies 400, 500, 600, 700, and 800 in embodiments described below may implement part or the entirety of at least one of the above-described camera modules 180, 280, 305, 312, and 313.

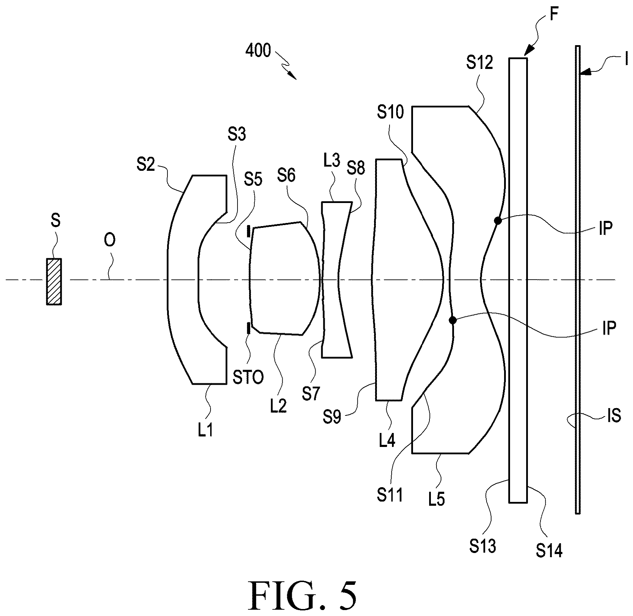

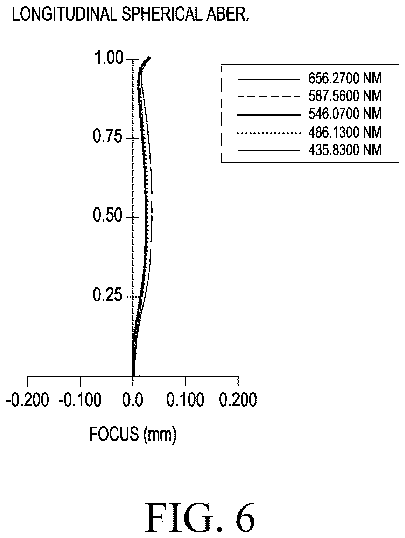

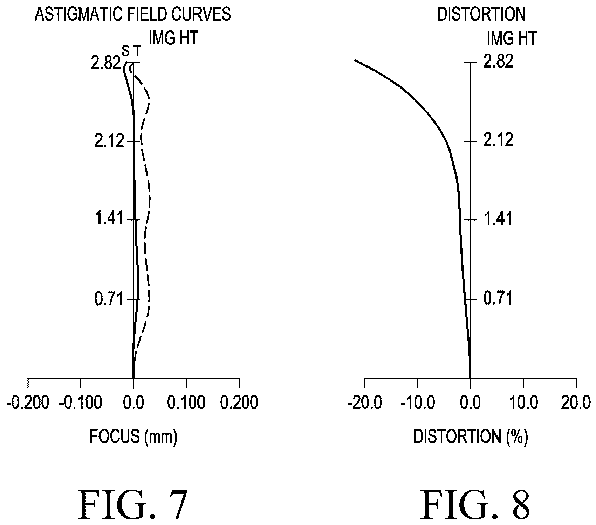

FIG. 5 is a diagram illustrating the lens assembly 400 according to an embodiment of the disclosure. FIG. 6 is a graph illustrating longitudinal spherical aberration of the lens assembly 400 of FIG. 5 according to an embodiment of the disclosure. FIG. 7 is a graph illustrating astigmatism of the lens assembly 400 of FIG. 5 according to an embodiment of the disclosure. FIG. 8 is a graph illustrating distortion of the lens assembly 400 of FIG. 5 according to an embodiment of the disclosure.

FIG. 6 is a graph illustrating the spherical aberration of the lens assembly 400 according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light with a wavelength of 656.2700 nanometers (NM) (e.g., red), light with a wavelength of 587.5600NM (e.g., yellow), light with a wavelength of 546.0700NM, light with a wavelength of 486.1300NM (e.g., blue), and light with a wavelength of 435.8300NM. FIG. 7 is a graph illustrating the astigmatism of the lens assembly 400 according to an embodiment of the disclosure, for light with the wavelength of 546.0700NM, in which 'S' represents a sagittal plane with a solid line, and 'T' represents a tangential plane (or meridional plane) with a dotted line. FIG. 8 is a graph illustrating the distortion of the lens assembly 400 according to an embodiment of the disclosure, for light with the wavelength of 546.0700NM. The refractive index of lens(es) mentioned in embodiments described below may refer to the refractive index for light with a wavelength of approximately 587.6nm.

Referring to FIGS. 5 to 8, the lens assembly 400 (e.g., the lens assembly 210 of FIG. 2) according to an embodiment of the disclosure may include an image sensor I or 230 and at least five lenses L1, L2, L3, L4, and L5. According to an embodiment, at least one of the lenses L1, L2, L3, L4, and L5 may be a plastic lens. For example, in an embodiment, the manufacturing cost of the lens assembly 400 may be reduced by fabricating the lenses L1, L2, L3, L4, and L5 of plastic within a range satisfying the conditions described later.

According to an embodiment, the lenses L1, L2, L3, L4, and L5 may be sequentially arranged along a direction of an optical axis O from an object S side to an image sensor I or 230 side. For example, the lenses L1, L2, L3, L4, and L5 may be arranged to be substantially aligned with the image sensor I or 230 on the optical axis O. In the embodiments described below, the ordinals 'first', 'second', 'third', 'fourth', and 'fifth' assigned to the lenses L1, L2, L3, L4, and L5 may refer to their arrangement order from the object S side. In an embodiment, the lens assembly 400 may include an aperture stop STO disposed between the first lens L1 and the second lens L2. For example, the second lens L2, the third lens L3, the fourth lens L4, and/or the fifth lens L5 may be understood as being disposed between the first lens L1 and the image sensor I, and the fourth lens L4 and/or the fifth lens L5 may be understood as being disposed between the third lens L3 and the image sensor I. In an embodiment, an optical component such as an IR cut filter F may be disposed between any one of the at least five lenses L1, L2, L3, L4, and L5 and the image sensor I or 230. The IR cut filter F may suppress or block, for example, light (e.g., IR light) of a wavelength that is not visible to the naked eye but is detected by a photosensitive material of a film or the image sensor I or 230 from entering the image sensor I or 230. The IR cut filter F may be disposed between the fifth lens L5 and the image sensor I or 230. Depending on the usage of the lens assembly 400, the IR cut filter F may be replaced by a band-pass filter that transmits IR light and suppresses or blocks visible light.

In the following detailed description, the first lens L1 may be referred to as the "first lens on the object S side", and the fifth lens L5 may be referred to as the "first lens on the image sensor I or 230 side". In an embodiment, "aligned along the direction of the optical axis O" may refer to alignment such that the optical axes of the lenses L1, L2, L3, L4, and L5 coincide with the optical axis of the image sensor I or 230 (e.g., an imaging plane IS). The imaging plane IS may, for example, receive or detect light aligned or focused by the lenses L1, L2, L3, L4, and L5. In an embodiment, a processor (e.g., the processor 120 of FIG. 1) may perform a focus adjustment operation and/or a focal length adjustment operation by linearly moving at least one of the lenses L1, L2, L3, L4, and L5 relative to the image sensor I or 230 along the direction of the optical axis O.

In the following embodiment(s), although some of the reference numerals assigned to lens surfaces in the drawings may not be directly mentioned, those skilled in the art will easily understand the configuration of each of the lenses L1, L2, L3, L4, and L5 or the lens surfaces based on lens data provided by [tables] described later. Although not illustrated in the drawings, the reference numerals (e.g., 'S1') of lens surfaces described in the [tables] below may exemplify reference points used for the arrangement of the lenses L1, L2, L3, L4, and L5 in a mechanical structure or arrangement design. For example, in the following [tables], a value described in a thickness item for a lens surface reference numeral 'S1' may be understood as the gap, distance, and/or air gap between the first lens L1 and the object S. In describing various subsequent embodiments, for brevity of the drawings, some of the reference numerals for the object-side surface(s) and sensor-side surface(s) of the lenses L1, L2, L3, L4, and L5 and/or inflection points IP may be omitted. The omitted reference numerals for lens surfaces in the drawings may be adaptively based on the configurations of different embodiments, and easily understood from the following [tables] of lens data for each embodiment. In the detailed description of embodiment(s) of the disclosure, "concave" or "convex" regarding the object-side surfaces or sensor-side surfaces of the lenses L1, L2, L3, L4, and L5 may refer to the shape of a lens surface at a point intersecting the optical axis O or in a paraxial region intersecting the optical axis O. A shape described as "concave" may refer to a curved lens surface with a lens thickness decreasing toward the optical axis O in a paraxial region. A shape described as "convex" may refer to a curved lens surface with a lens thickness increasing towards the optical axis O in a paraxial region.

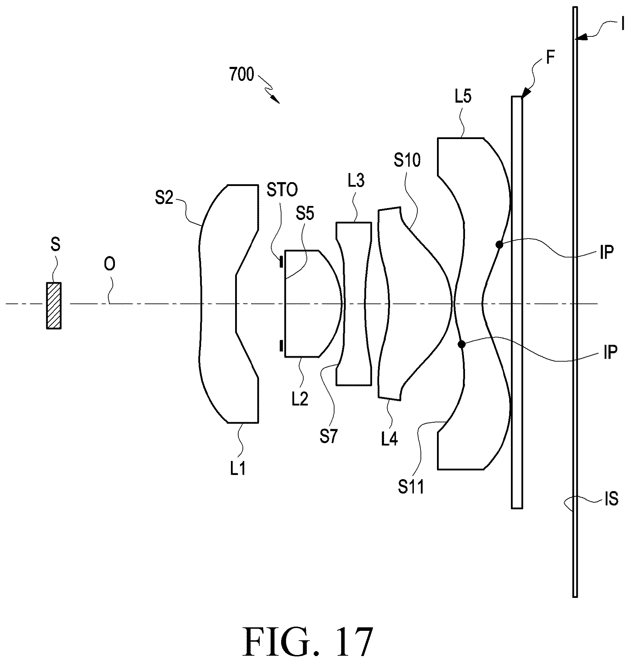

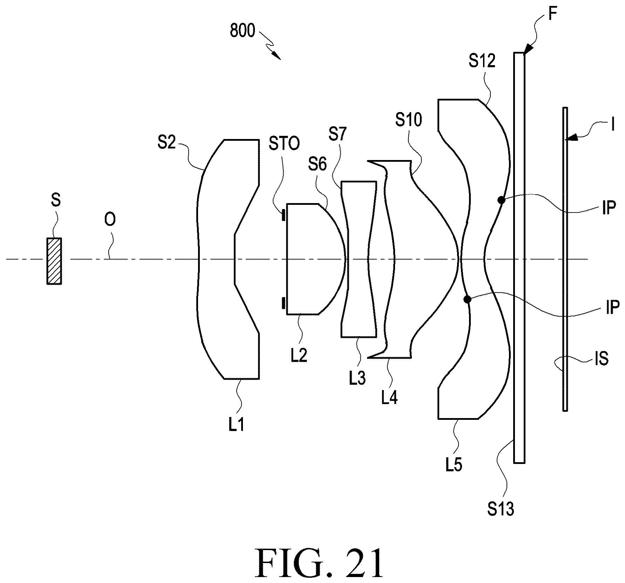

According to an embodiment, as the aperture stop STO is disposed between the first lens L1 and the second lens L2, wide-angle performance (e.g., a field of view of approximately 110 degrees or more) may be achieved while miniaturizing a field of view and/or a diameter. In an embodiment, in achieving wide-angle performance, the first lens L1 may have a negative refractive power. In an embodiment, when the first lens L1 has a negative refractive power and achieves wide-angle performance, an object-side surface S2 of the first lens L1 may have a concave shape in a paraxial region, thereby suppressing the increase of spherical aberration. In an embodiment, an image sensor-side surface S3 of the first lens L1 may have a concave shape. As will be described later, for example, in the embodiments of FIG. 17 or FIG. 21, the image sensor-side surface S3 of the first lens L1 may have a convex shape. In the following detailed description, an "inflection point IP" may refer to a point where the radius of curvature changes in a part that does not intersect the optical axis O. When it is said that the "radius of curvature changes", this may be understood as the value of the radius of curvature changing from a negative value to a positive value, or from a positive value to a negative value.

Further, for the lenses L1, L2, L3, L4, and L5 of the disclosure, a radius, an effective focal length f, a total track length (TTL), a surface distance (SD), a thickness, or the image height (IH) of the image sensor I or 230 may all be in units of millimeters (mm) in the following detailed description, unless otherwise specified. Further, the radii, effective focal lengths, TTL, SDs, or thicknesses of the lenses L1, L2, L3, L4, and L5 may be distances measured along the optical axis of the lenses (e.g., distances measured along the optical axis O at points interacting the optical axis O), and the IH of the image sensor may be a distance measured along a direction substantially perpendicular to the optical axis from a point interacting the optical axis O.

According to an embodiment, the second lens L2, which is disposed second from the object S side, for example, between the first lens L1 and the image sensor I or 230, may have a positive refractive power and a low refractive index of approximately 1.6 or less. In an embodiment, at least one of the first lens L1 or the second lens L2 may have a low refractive index of approximately 1.6 or less, and as the first lens L1 or the second lens L2 has a low refractive index, aberration correction in the lens assembly 400 may be facilitated. In an embodiment, an object-side surface S5 and an image sensor-side surface S6 of the second lens L2 may have a convex shape.

According to an embodiment, the third lens L3 may be disposed third from the object S side, for example, between the second lens L2 and the fourth lens L4, and have a negative refractive power. As will be described later, the third lens L3 may be useful in reducing the total lens length by having a high refractive index (e.g., a refractive index of approximately 1.66 or more). In an embodiment, when the third lens L3 is made of a material with a high refractive index, it may be useful for correcting chromatic aberration caused by the second lens L2. In an embodiment, when an image sensor-side surface S8 of the third lens L3 has a concave shape, it may be even more useful for aberration correction and miniaturization.

According to an embodiment, the fourth lens L4 may be disposed fourth from the object S side and have a positive refractive power. In an embodiment, the fourth lens L4 may include a convex object-side surface S9 and a convex image sensor-side surface S10. In an embodiment, as in the embodiment of FIG. 17 or FIG. 21, the fourth lens L4 may have a meniscus shape that is convex towards the image sensor I or 230, for example, includes a concave object-side surface S9 and a convex image sensor-side surface S10, thereby facilitating marginal aberration correction.

According to an embodiment, the fifth lens L5 disposed between the fourth lens L4 and the image sensor I or 230 may have a negative refractive power. In an embodiment, both an object-side surface S11 and an image sensor-side surface S12 of the fifth lens L5 may be aspheric surfaces, and at least one of the object-side surface S11 or the image sensor-side surface S12 of the fifth lens L5 may include an inflection point IP. In an embodiment, when the image sensor-side surface S12 of the fifth lens L5 includes an inflection point IP, it may suppress field curvature from a chief portion through which the optical axis O passes to a marginal portion. In an embodiment, the fifth lens L5 may have a meniscus shape convex towards the object S in a paraxial region, and an inflected shape in a marginal region, gradually tilted towards the object S as it moves away from the optical axis O. The fifth lens L5 implemented in the inflected shape may achieve wide-angle performance while having a smaller effective diameter, even when disposed closest to the image sensor I or 230. For example, the shape of the fifth lens L5 described above may contribute to miniaturization of the lens assembly 400 while providing an environment for achieving wide-angle performance.

According to an embodiment, the IR cut filter F may be disposed between the fifth lens L5 and the image sensor I or 230. As mentioned earlier, the IR cut filter F may block light in a wavelength band that is not detected by the naked eye but is detected by the photosensitive material or the image sensor I or 230. In an embodiment, when the lens assembly 400 functions as a camera (e.g., a depth camera) that detects light in the IR wavelength band, the IR cut filter F may be replaced by a band-pass filter. In an embodiment, the IR cut filter F may be replaced by a coating material disposed on any one of the lens surfaces of the lenses L1, L2, L3, L4, and L5.

According to an embodiment, the lens assembly 400 may be miniaturized while having wide-angle performance by satisfying the conditions presented through the following [Equations 1, 2, and 3].

[Equation 1]

$$120 \leq FOV$$

[Equation 2]

$$Fno \leq 2.3$$

[Equation 3]

$$\frac{TTL}{IH \times 2} \leq 1.0$$

In [Equation 1], 'FOV' may represent the field of view of the lens assembly 400. In an embodiment, as in the embodiment of FIG. 17 or FIG. 21, when the first lens L1 includes the concave object-side surface S2 and the convex image sensor-side surface S3, and the fourth lens L4 includes the concave object-side surface S9 and the convex image sensor-side surface S10, the lens assembly 400 may have a field of view of approximately 123 degrees or more. In [Equation 2], 'Fno' may represent the F-number of the lens assembly 400. When the condition presented through [Equation 2] is satisfied, the lens assembly 400 may implement a bright optical system while providing a good resolution. In [Equation 3], 'total track length (TTL)' may represent the total lens length, which is the distance measured along the optical axis O from the object-side surface S2 of the first lens L1 to the image sensor I or 230 (e.g., the image plane IS), and 'image height (IH)' may represent the image height of the image sensor I or 230. The image height of the image sensor I or 230 may be half of the diagonal length of the image plane IS. In an embodiment, the lens assembly 400 may be implemented to have a short total lens length relative to the image height by satisfying the condition according to [Equation 3], thereby facilitating miniaturization.

According to an embodiment, the lens assembly 400 may be further miniaturized by satisfying the condition presented through the following [Equation 4]. In an embodiment, when the lens assembly 400 satisfies the condition presented through [Equation 4], this may facilitate various aberration control and optimization of modulation transfer function (MTF) performance.

[Equation 4]

$$1.66 \leq N3$$

In [Equation 4], 'N3' may represent the refractive index of the third lens L3. In an embodiment, when at least one of the lenses L1, L2, L3, L4, and L5 have a high refractive index of 1.66 or more, the lens assembly 400 may more easily satisfy the condition presented in [Equation 3].

In an embodiment, the lens assembly 400 may facilitate chromatic aberration control (e.g., longitudinal chromatic aberration control) by satisfying a condition related to the Abbe number (e.g., the Abbe number V3 of the third lens L3) presented through [Equation 5]. In an embodiment, when the lens assembly 400 satisfies the condition presented through [Equation 5], a high refractive index of any one of the lenses L1, L2, L3, L4, and L5, for example, the third lens L3, may be easily implemented. In an embodiment, the third lens L3 may have a center thickness of approximately 0.15mm or more measured along the optical axis O. In an embodiment, it may have a center thickness of approximately 0.15mm or more, and among the lenses L1, L2, L3, L4, and L5, the third lens L3 may have the smallest center thickness.

[Equation 5]

$$17 \leq V3 \leq 25$$

According to an embodiment, when any one of the lenses L1, L2, L3, L4, and L5 has a high refractive index, design freedom in selecting a manufacturing material for other lenses may be increased. For example, when the third lens L3 satisfies the condition presented in [Equation 4] and/or [Equation 5], the first lens L1, the second lens L2, and/or the fourth lens L4 may be fabricated as lenses having a refractive index of approximately 1.6 or less, and the design freedom in material selection may be increased in fabricating lenses with relatively low refractive indexes. Although this embodiment exemplifies the third lens L3 as having a high refractive index, the embodiments of the disclosure are not limited thereto. As mentioned earlier, when at least one of the lenses L1, L2, L3, L4, and L5 has a high refractive index of 1.66 or more, the condition regarding the image height and total lens length presented through [Equation 3] may be satisfied. In an embodiment, when any one of the lenses L1, L2, L3, L4, and L5 has a high refractive index of 1.66 or more, even if the remaining lenses have a relatively low refractive index (e.g., a refractive index of approximately 1.6 or less), the lens assembly 400 may easily satisfy the condition presented through [Equation 3], and the design freedom in selecting a lens material may be increased.

According to an embodiment, the lens assembly 400 may be miniaturized and provide wide-angle performance of approximately 120 degrees or more by satisfying a condition related to the arrangement of the lenses L1, L2, L3, L4, and L5 presented through the following
[Equation 6].

$$[\text{Equation 6}]$$
$$\frac{SD}{TTL} \leq 0.9$$

In [Equation 6], 'surface distance (SD)' may represent the distance measured along the optical axis O from the object-side surface S2 of the first lens L1 to the image sensor-side surface S12 of the fifth lens. For example, when the lenses L1, L2, L3, L4, and L5 are arranged within a distance range of approximately 90% or less of the total lens length, TTL, the lens assembly 400 may be miniaturized and provide good or improved wide-angle performance. In an embodiment, when a calculated value according to [Equation 6] exceeds approximately 0.9, the first lens 9 e.g., the fifth lens L5) on the image sensor I or 230 side may be disposed excessively close to the image sensor I or 230, which may make it difficult to dispose the IR cut filter F. For example, when the calculated value according to [Equation 6] exceeds approximately 0.9, it may be difficult to manufacture the lens assembly 400.

According to an embodiment, the lens assembly 400 may be miniaturized and easily achieve wide-angle performance by satisfying at least some of the conditions described above. In an embodiment, when at least one of the lenses L1, L2, L3, L4, and L5 has a high refractive index of approximately 1.66 or more, the design freedom in selecting a material for the remaining lenses may be increased. For example, when at least one of the lenses L1, L2, L3, L4, and L5 has a high refractive index of approximately 1.66 or more, the manufacturing cost of the lens assembly 400 may be reduced.

According to an embodiment, the lens assembly 400 may achieve a field of view of approximately 120 degrees with a focal length of approximately 2.03mm and an F-number of approximately 2.28. In an embodiment, the lens assembly 400 may satisfy at least some of the condition(s) presented regarding the shapes and refractive powers of the aforementioned lens(s) L1, L2, L3, L4, and L5 (e.g., lens surface(s)), the total lens length, the image height, the field of view, the thickness of the third lens L3, and/or the arrangement, and may be manufactured to exemplary specifications illustrated in the following [Table 1].

[Table 1]

| Surface | Radius | Thickness | Refractive index (nd) | Abbe number (vd) |
|---|---|---|---|---|
| Object (S) | Infinity | 1000 | | |
| S1 | Infinity | 0.330 | | |
| S2 | -7.158 | 0.364 | 1.53500 | 55.71 |
| S3 | 3.235 | 0.651 | | |
| Stop (STO) | Infinity | 0.000 | | |
| S5 | 2.976 | 0.894 | 1.53500 | 55.71 |
| S6 | -1.405 | 0.020 | | |
| S7 | 2.495 | 0.200 | 1.67073 | 19.23 |
| S8 | 1.504 | 0.419 | | |
| S9 | 35.083 | 0.894 | 1.53500 | 55.71 |
| S10 | -0.926 | 0.079 | | |
| S11 | 1.825 | 0.385 | 1.61444 | 25.92 |
| S12 | 0.633 | 0.372 | | |
| S13 | Infinity | 0.210 | 1.5168 | 64.2 |
| S14 | Infinity | 0.580 | | |

(continued)

| Surface | Radius | Thickness | Refractive index (nd) | Abbe number (vd) |
|---|---|---|---|---|
| Image surface(IS) | Infinity | 0.020 | | |

The following [Table 2] and [Table 3] describe the aspheric coefficients of the lenses L1, L2, L3, L4, and L5, and an aspheric surface may be defined as the following [Equation 7].

$$[\text{Equation 7}]$$
$$x = \frac{y^2/R}{1 + \sqrt{1 - (1+k)(y/R)^2}} + \sum_i (A_i)(y^i)$$

In [Equation 7], "x" may represent a distance from a point where the optical axis O passes on a lens surface in the direction of the optical axis O, "y" may represent a distance from the optical axis O in a direction perpendicular to the optical axis O, 'R' may represent a radius of curvature at the vertex of a lens, 'k' may represent the Conic constant, and 'Ai' may represent aspheric coefficients, which may be expressed as 'A', 'B', 'C', 'D', 'E', 'F', 'G', 'H', 'J', 'K', 'L', 'M', 'N', and 'O' in [Tables] described later.

[Table 2]

| Surface | S2 | S3 | S5 | S6 | S7 |
|---|---|---|---|---|---|
| k(Conic) | 2.6899E+01 | -1.9517E+01 | -4.0160E+00 | 1.6311E+00 | 6.7382E+00 |
| A(4th)/C4 | 5.4185E-01 | 2.9713E-01 | -6.8854E-03 | -1.5092E-02 | -2.0001E-01 |
| B(6th)/C5 | -5.7036E-02 | -9.6981E-03 | -1.4975E-03 | 2.9281E-03 | -2.4775E-03 |
| C(8th)/C6 | 6.9069E-03 | -4.6873E-03 | -3.0198E-04 | -1.4881E-03 | -6.9158E-03 |
| D(10th)/C7 | -3.5095E-03 | -3.8766E-03 | -3.6378E-05 | 7.0063E-04 | 6.5710E-05 |
| E(12th)/C8 | 9.8550E-04 | -9.0071E-04 | -2.7851E-05 | -2.0608E-04 | -6.0824E-04 |
| F(14th)/C9 | 5.3259E-05 | -2.3654E-05 | -7.6395E-06 | 7.7711E-05 | -1.7565E-05 |
| G(16th)/C10 | 1.5702E-04 | 1.2432E-04 | -4.4236E-06 | -1.3068E-05 | -8.2286E-05 |
| H(18th)/C11 | 4.0794E-05 | 8.4530E-05 | -1.5457E-06 | 3.3928E-06 | -1.2700E-05 |
| J(20th)/C12 | 9.2272E-06 | 2.4952E-05 | 2.3254E-06 | 1.5868E-06 | -1.0039E-05 |

[Table 3]

| Surface | S8 | S9 | S10 | S11 | S12 |
|---|---|---|---|---|---|
| k(Conic) | -2.8133E-01 | -2.0996E+01 | -2.4704E+00 | -1.5230E+01 | -3.7869E+00 |
| A(4th)/C4 | -1.9592E-01 | 4.0563E-02 | 2.3315E-01 | -9.4348E-01 | -1.3967E+00 |
| B(6th)/C5 | 1.8817E-02 | -1.1062E-02 | -1.0491E-02 | 1.4883E-01 | 1.9877E-01 |
| C(8th)/C6 | -4.3492E-03 | 1.3113E-03 | 1.4937E-02 | 1.2543E-02 | -6.8439E-02 |
| D(10th)/C7 | 8.6086E-04 | -3.7783E-03 | -1.7392E-02 | -6.5987E-04 | 3.0100E-02 |
| E(12th)/C8 | -1.4448E-04 | 5.2142E-04 | 2.0746E-03 | -4.1858E-03 | -9.5390E-03 |
| F(14th)/C9 | -4.3412E-05 | -1.5329E-04 | -2.8702E-04 | -1.5128E-03 | 4.1844E-03 |
| G(16th)/C10 | 2.2797E-05 | 7.5257E-05 | 8.6860E-04 | 2.5332E-04 | -2.9130E-03 |
| H(18th)/C11 | -1.2492E-05 | 3.3994E-05 | -3.7796E-04 | -1.7518E-04 | 4.7729E-04 |
| J(20th)/C12 | 1.5595E-05 | 4.2064E-05 | 2.6489E-04 | 4.9658E-04 | -5.7403E-04 |

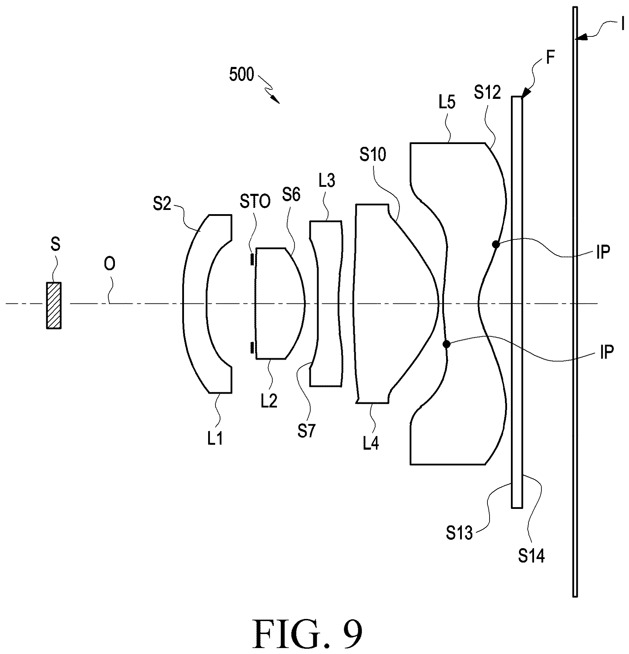

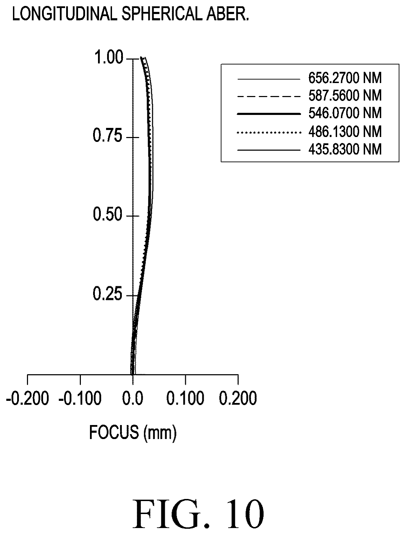

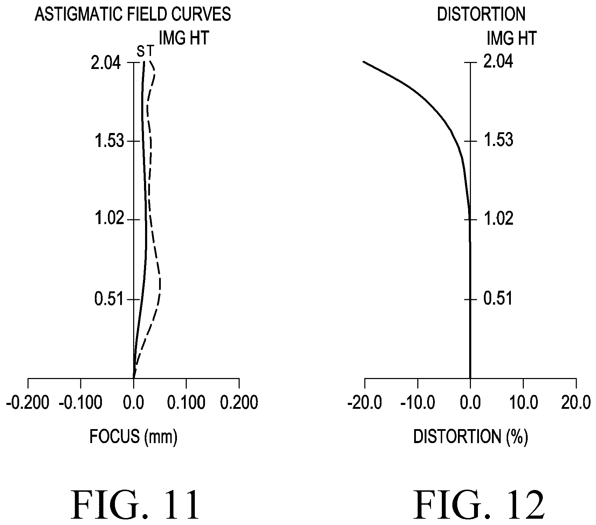

FIG. 9 is a diagram illustrating the lens assembly 500 according to an embodiment of the disclosure. FIG. 10 is a graph illustrating longitudinal spherical aberration of the lens assembly 500 of FIG. 9 according to an embodiment of the disclosure. FIG. 11 is a graph illustrating astigmatism of the lens assembly 500 of FIG. 9 according to an embodiment of the disclosure. FIG. 12 is a graph illustrating distortion of the lens assembly 500 of FIG. 9 according to an embodiment of the disclosure.

The lens assembly 500 of FIG. 9 may achieve a field of view of approximately 120 degrees with a focal length of approximately 1.464mm and an F-number of approximately 2.28. In an embodiment, the lens assembly 500 may satisfy at least some of the condition(s) presented regarding the shapes and refractive powers of the aforementioned lens(s) L1, L2, L3, L4, and L5 (e.g., lens surface(s)), the total lens length, the image height, the field of view, the thickness of the third lens L3, and/or the arrangement, and may be manufactured to exemplary specifications illustrated in the following [Table 4] and have aspheric coefficients of [Table 5] and [Table 6].

[Table 4]

| Surface | Radius | Thickness | Refractive index (nd) | Abbe number (vd) |
|---|---|---|---|---|
| Object (S) | Infinity | 1000 | | |
| S1 | Infinity | 0.000 | | |
| S2 | -8.568 | 0.222 | 1.54400 | 55.91 |
| S3 | 3.587 | 0.444 | | |
| Stop (STO) | Infinity | 0.020 | | |
| S5 | 5.663 | 0.496 | 1.54400 | 55.91 |
| S6 | -1.299 | 0.084 | | |
| S7 | 3.600 | 0.210 | 1.66074 | 20.36 |
| S8 | 1.883 | 0.114 | | |
| S9 | -11.222 | 0.877 | 1.54400 | 55.91 |
| S10 | -0.560 | 0.020 | | |
| S11 | 1.434 | 0.360 | 1.61444 | 25.92 |
| S12 | 0.467 | 0.320 | | |
| S13 | Infinity | 0.110 | 1.51680 | 64.2 |
| S14 | Infinity | 0.463 | | |
| Image surface(IS) | Infinity | 0.030 | | |

[Table 5]

| Surface | S2 | S3 | S5 | S6 | S7 |
|---|---|---|---|---|---|
| k(Conic) | 8.4392E+01 | 7.7154E+00 | -9.8825E+01 | 1.9304E+00 | -4.8176E+01 |
| A(4th)/C4 | 9.3376E-01 | 1.9665E-01 | -6.8372E-03 | -4.0539E-02 | -1.1790E-01 |
| B(6th)/C5 | -2.0592E+00 | -2.1907E-03 | -9.4341E-04 | 7.0792E-05 | 6.7061E-03 |
| C(8th)/C6 | 5.6691E+00 | -7.8500E-04 | -1.3074E-04 | -1.7183E-03 | -4.0384E-03 |
| D(10th)/C7 | -1.2814E+01 | -3.0241E-03 | 4.6980E-05 | -1.2516E-04 | -2.9794E-04 |
| E(12th)/C8 | 2.2535E+01 | -1.0022E-03 | 0.0000E+00 | 0.0000E+00 | 3.3939E-04 |
| F(14th)/C9 | -2.8294E+01 | -3.9846E-04 | 0.0000E+00 | 0.0000E+00 | -2.3089E-06 |
| G(16th)/C10 | 2.3581E+01 | -6.1130E-05 | 0.0000E+00 | 0.0000E+00 | 5.4650E-05 |
| H(18th)/C11 | -1.1749E+01 | -1.5244E-05 | 0.0000E+00 | 0.0000E+00 | 0.0000E+00 |
| J(20th)/C12 | 2.5826E+00 | 0.0000E+00 | 0.0000E+00 | 0.0000E+00 | 0.0000E+00 |

[Table 6]

| Surface | S8 | S9 | S10 | S11 | S12 |
|---|---|---|---|---|---|
| k(Conic) | -7.3186E-01 | 2.0575E+01 | -1.6029E+00 | -2.1629E+01 | -3.9273E+00 |
| A(4th)/C4 | -1.3144E-01 | 6.1103E-02 | 1.2268E-01 | -6.2768E-01 | -9.6794E-01 |
| B(6th)/C5 | 6.4910E-03 | -1.2804E-02 | -2.7792E-03 | 4.8376E-02 | 1.3707E-01 |
| C(8th)/C6 | -1.1069E-03 | 4.9054E-03 | 2.3180E-02 | 3.8079E-02 | -1.5486E-02 |
| D(10th)/C7 | -1.0662E-03 | -8.7061E-04 | 9.5301E-04 | 1.0305E-02 | 3.2637E-02 |
| E(12th)/C8 | 6.6568E-04 | 3.0220E-04 | 3.1225E-03 | 1.3321E-03 | 6.3390E-03 |
| F(14th)/C9 | -2.4186E-04 | -9.6179E-05 | -7.5661E-04 | -4.4220E-03 | 5.8783E-03 |
| G(16th)/C10 | 9.1235E-05 | -1.8967E-06 | -1.3347E-04 | -1.1288E-03 | 2.1070E-03 |
| H(18th)/C11 | -3.1889E-05 | 1.0765E-05 | -2.2764E-04 | -2.4200E-04 | 9.4485E-04 |
| J(20th)/C12 | 0.0000E+00 | -2.3808E-06 | 2.5296E-05 | 2.7191E-04 | 3.0495E-04 |

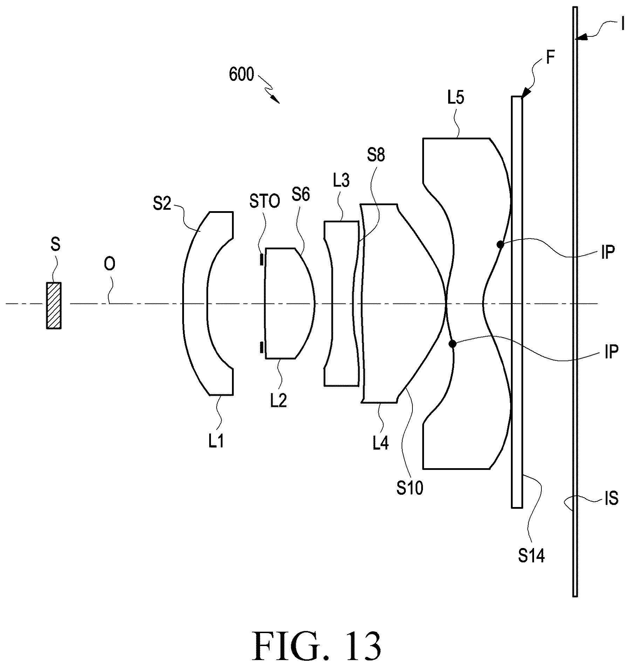

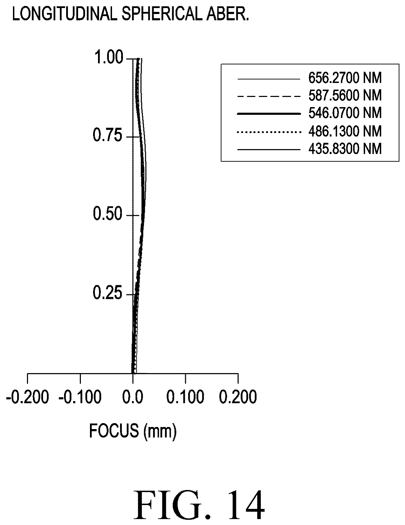

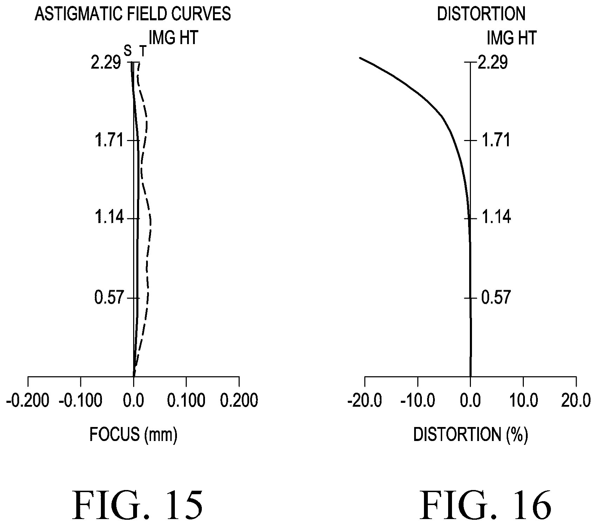

FIG. 13 is a diagram illustrating the lens assembly 600 according to an embodiment of the disclosure. FIG. 14 is a graph illustrating longitudinal spherical aberration of the lens assembly 600 of FIG. 13 according to an embodiment of the disclosure. FIG. 15 is a graph illustrating astigmatism of the lens assembly 600 of FIG. 13 according to an embodiment of the disclosure. FIG. 16 is a graph illustrating distortion of the lens assembly 600 of FIG. 13 according to an embodiment of the disclosure.

The lens assembly 600 of FIG. 13 may achieve a field of view of approximately 120 degrees with a focal length of approximately 1.64mm and an F-number of approximately 2.28. In an embodiment, the lens assembly 600 may satisfy at least some of the condition(s) presented regarding the shapes and refractive powers of the aforementioned lens(s) L1, L2, L3, L4, and L5 (e.g., lens surface(s)), the total lens length, the image height, the field of view, the thickness of the third lens L3, and/or the arrangement, and may be manufactured to exemplary specifications illustrated in the following [Table 7] and have aspheric coefficients of [Table 8] and [Table 9].

[Table 7]

| Surface | Radius | Thickness | Refractive index (nd) | Abbe number (vd) |
|---|---|---|---|---|
| Object (S) | infinity | 1000 | | |
| S1 | infinity | 0.000 | | |
| S2 | -7.372 | 0.281 | 1.54400 | 55.91 |
| S3 | 2.965 | 0.597 | | |
| Stop (STO) | infinity | 0.035 | | |
| S5 | 4.186 | 0.588 | 1.53500 | 55.71 |
| S6 | -1.498 | 0.180 | | |
| S7 | 3.680 | 0.240 | 1.67073 | 19.23 |
| S8 | 1.901 | 0.114 | | |
| S9 | 16.954 | 0.957 | 1.53500 | 55.71 |
| S10 | -0.702 | 0.020 | | |
| S11 | 1.550 | 0.400 | 1.61444 | 25.92 |
| S12 | 0.561 | 0.328 | | |
| S13 | infinity | 0.110 | 1.51680 | 64.2 |
| S14 | infinity | 0.607 | | |
| Image surface(IS) | infinity | 0.013 | | |

[Table 8]

| Surface | S2 | S3 | S5 | S6 | S7 |
|---|---|---|---|---|---|
| k(Conic) | 4.1683E+01 | -1.9050E+00 | -9.9000E+01 | 3.7549E+00 | -2.7472E+01 |
| A(4th)/C4 | 4.5000E-01 | 2.1056E-01 | -7.9873E-03 | -4.0591E-02 | -1.3095E-01 |
| B(6th)/C5 | -4.4970E-02 | -7.3000E-03 | -1.7883E-03 | 1.0975E-04 | 5.3483E-03 |
| C(8th)/C6 | 7.1973E-03 | -7.7282E-04 | -2.0181E-04 | -4.8228E-04 | -1.7448E-03 |
| D(10th)/C7 | -3.3430E-03 | -1.8924E-03 | -6.3804E-05 | 8.0094E-06 | -2.1270E-04 |
| E(12th)/C8 | 9.0428E-04 | -3.5062E-04 | 0.0000E+00 | 0.0000E+00 | -1.8059E-05 |
| F(14th)/C9 | -3.9890E-05 | -6.7660E-05 | 0.0000E+00 | 0.0000E+00 | -1.5738E-05 |
| G(16th)/C10 | 2.0975E-04 | 4.4709E-05 | 0.0000E+00 | 0.0000E+00 | -2.6543E-05 |
| H(18th)/C11 | 2.5468E-05 | 1.3805E-05 | 0.0000E+00 | 0.0000E+00 | 0.0000E+00 |
| J(20th)/C12 | 2.2948E-05 | 0.0000E+00 | 0.0000E+00 | 0.0000E+00 | 0.0000E+00 |

[Table 9]

| Surface | S8 | S9 | S10 | S11 | S12 |
|---|---|---|---|---|---|
| k(Conic) | -3.9298E-01 | 8.3845E+01 | -1.6443E+00 | -1.7539E+01 | -3.7743E+00 |
| A(4th)/C4 | -1.4488E-01 | 1.9508E-02 | 1.3542E-01 | -6.4496E-01 | -1.1269E+00 |
| B(6th)/C5 | 1.3066E-02 | -5.4385E-03 | -1.8725E-02 | 4.5563E-02 | 1.1788E-01 |
| C(8th)/C6 | -1.2995E-03 | 5.8456E-03 | 2.3534E-02 | 3.1670E-02 | -4.6700E-02 |
| D(10th)/C7 | -6.2414E-04 | -1.6331E-03 | 4.1642E-04 | 4.2005E-03 | 1.3516E-02 |
| E(12th)/C8 | 1.9534E-04 | 3.1654E-04 | 3.4958E-03 | 1.7016E-03 | -6.6719E-03 |
| F(14th)/C9 | -6.7950E-05 | -3.2145E-04 | -3.1950E-04 | -3.3321E-03 | -1.0394E-03 |
| G(16th)/C10 | 1.0439E-05 | -7.5687E-06 | 1.4307E-04 | -6.3910E-04 | -2.0281E-03 |
| H(18th)/C11 | -8.0599E-06 | -3.9256E-05 | -3.1655E-04 | -8.6103E-06 | 3.6521E-05 |
| J(20th)/C12 | 0.0000E+00 | -3.6620E-06 | 1.2499E-06 | 7.0349E-04 | -4.3579E-04 |

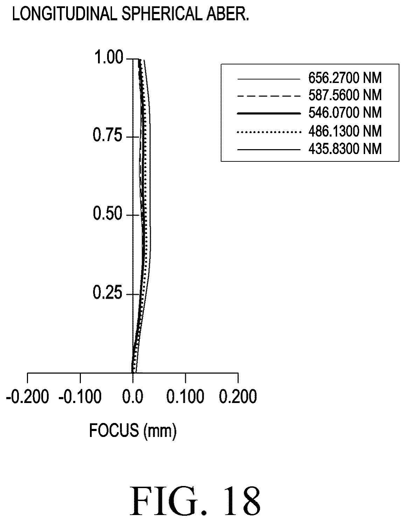

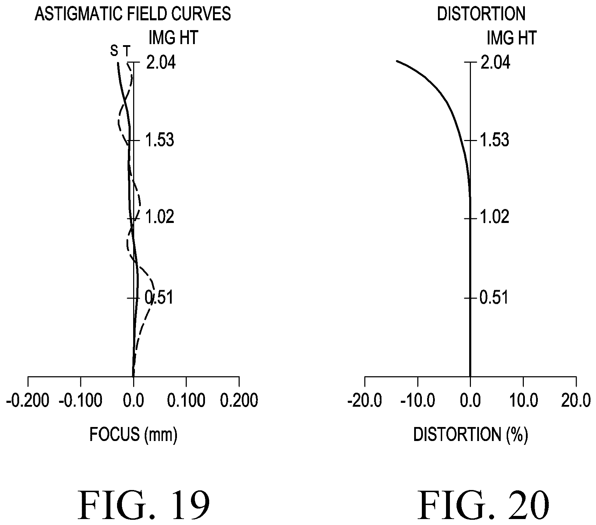

FIG. 17 is a diagram illustrating the lens assembly 700 according to an embodiment of the disclosure. FIG. 18 is a graph illustrating longitudinal spherical aberration of the lens assembly 700 of FIG. 17 according to an embodiment of the disclosure. FIG. 19 is a graph illustrating astigmatism of the lens assembly 700 of FIG. 17 according to an embodiment of the disclosure. FIG. 20 is a graph illustrating distortion of the lens assembly 700 of FIG. 17 according to an embodiment of the disclosure.

The lens assembly 700 of FIG. 17 may achieve a field of view of approximately 123 degrees with a focal length of approximately 1.267mm and an F-number of approximately 2.28. In the lens assembly 700of FIG. 17, the first lens L1 may have the convex image sensor-side surface S3, and the fourth lens L4 may have a meniscus shape convex towards the image sensor I or 230. In an embodiment, the lens assembly 700 may satisfy at least some of the condition(s) presented regarding the shapes and refractive powers of the aforementioned lens(s) L1, L2, L3, L4, and L5 (e.g., lens surface(s)), the total lens length, the image height, the field of view, the thickness of the third lens L3, and/or the arrangement. In an embodiment, the lens assembly 700 may be manufactured to exemplary specifications illustrated in the following [Table 10] and have aspheric coefficients of [Table 11] and [Table 12].

[Table 10]

| Surface | Radius | Thickness | Refractive index (nd) | Abbe number (vd) |
|---|---|---|---|---|
| Object (S) | infinity | 1000 | | |
| S1 | infinity | 0.330 | | |
| S2 | -2.585 | 0.343 | 1.53500 | 55.71 |
| S3 | -34.138 | 0.491 | | |

(continued)

| Surface | Radius | Thickness | Refractive index (nd) | Abbe number (vd) |
|---|---|---|---|---|
| Stop (STO) | infinity | 0.000 | | |
| S5 | 6.251 | 0.580 | 1.53500 | 55.71 |
| S6 | -0.706 | 0.020 | | |
| S7 | 4.958 | 0.200 | 1.67073 | 19.23 |
| S8 | 1.406 | 0.252 | | |
| S9 | -1.236 | 0.633 | 1.53500 | 55.71 |
| S10 | -0.494 | 0.020 | | |
| S11 | 0.838 | 0.280 | 1.67073 | 19.23 |
| S12 | 0.417 | 0.283 | | |
| S13 | infinity | 0.110 | 1.5168 | 64.2 |
| S14 | infinity | 0.400 | | |
| Image surface(IS) | infinity | 0.020 | | |

[Table 11]

| Surface | S2 | S3 | S5 | S6 | S7 |
|---|---|---|---|---|---|
| k(Conic) | -3.2215E+01 | 1.9841E+03 | 2.8452E+02 | -4.2476E-01 | -1.3732E+02 |
| A(4th)/C4 | 4.2008E-01 | 2.1491E-01 | -7.1737E-03 | -1.3345E-02 | -9.5710E-02 |
| B(6th)/C5 | -2.8465E-02 | 4.7010E-03 | -4.0535E-04 | -1.7962E-03 | 9.7241E-03 |
| C(8th)/C6 | 7.7755E-03 | 4.5064E-03 | -1.2782E-04 | -2.7119E-03 | -4.2645E-03 |
| D(10th)/C7 | -5.1583E-03 | -1.0124E-03 | 9.8536E-06 | 3.1283E-04 | 1.1847E-03 |
| E(12th)/C8 | -3.4458E-04 | -4.8544E-04 | -1.6007E-05 | -2.2172E-04 | -3.5547E-04 |
| F(14th)/C9 | -8.7932E-04 | -4.3057E-04 | 5.0966E-06 | 7.2255E-05 | 2.7227E-04 |
| G(16th)/C10 | -8.2052E-06 | -1.2163E-04 | -5.4449E-06 | 4.8101E-05 | -5.9712E-07 |
| H(18th)/C11 | -9.7712E-05 | -2.9373E-05 | 2.2627E-06 | -1.1414E-05 | -1.0971E-05 |
| J(20th)/C12 | 2.1914E-05 | -1.0142E-05 | -7.8995E-07 | 2.0437E-05 | 2.3949E-06 |
| K(22th)/C13 | -1.2916E-06 | 2.5053E-05 | 1.1119E-06 | 2.1284E-06 | -7.6113E-06 |
| L(24th)/C14 | -1.0608E-05 | -6.1415E-06 | -2.9041E-06 | 9.0144E-06 | 1.4688E-06 |
| M(26th)/C15 | 7.4187E-06 | 8.4336E-06 | 3.6132E-06 | 1.2285E-06 | -4.7582E-06 |
| N(28th)/C16 | 0.0000E+00 | 4.8568E-07 | -7.8553E-07 | -3.2799E-07 | 1.7341E-08 |
| O(30th)/C17 | 0.0000E+00 | -2.7885E-06 | -2.9489E-07 | 3.7631E-07 | -1.7702E-06 |

[Table 12]

| Surface | S8 | S9 | S10 | S11 | S12 |
|---|---|---|---|---|---|
| k(Conic) | -3.4177E+00 | -7.8547E+00 | -1.2509E+00 | -9.6920E+00 | -3.5008E+00 |
| A(4th)/C4 | -1.3656E-01 | 8.9901E-02 | 2.4274E-01 | -5.6090E-01 | -9.8623E-01 |
| B(6th)/C5 | 2.0822E-02 | 1.3108E-02 | 2.8137E-02 | 3.7354E-02 | 1.3269E-01 |
| C(8th)/C6 | -5.4563E-03 | -2.8618E-04 | 1.7488E-02 | -1.1780E-04 | -5.9969E-02 |
| D(10th)/C7 | 9.6988E-04 | -3.3669E-03 | -1.2457E-02 | 9.3136E-04 | 2.4644E-02 |
| E(12th)/C8 | -2.0665E-04 | 1.5093E-03 | 1.4549E-03 | 2.1075E-03 | -1.3556E-02 |
| F(14th)/C9 | 5.4221E-05 | -8.3119E-04 | -9.7291E-04 | -3.5516E-03 | 4.9342E-03 |

(continued)

| Surface | S8 | S9 | S10 | S11 | S12 |
|---|---|---|---|---|---|
| G(16th)/C10 | 4.4993E-05 | 3.4967E-04 | 5.7991E-04 | 2.1684E-03 | -2.1622E-03 |
| H(18th)/C11 | -1.0162E-04 | -2.4820E-04 | -3.0339E-04 | -9.1330E-04 | 1.4113E-03 |
| J(20th)/C12 | 2.0036E-05 | -1.3616E-06 | 9.7445E-05 | 1.0223E-03 | -3.6827E-04 |
| K(22th)/C13 | -1.9909E-05 | -3.3447E-05 | -5.1428E-05 | -4.7752E-04 | 1.8719E-04 |
| L(24th)/C14 | 7.1710E-06 | 2.5193E-05 | -3.2061E-05 | 2.9135E-04 | 9.5243E-05 |
| M(26th)/C15 | -5.8123E-06 | -1.4186E-05 | 2.2720E-05 | -5.5973E-05 | 2.0912E-06 |
| N(28th)/C16 | 5.2730E-06 | -1.6413E-05 | 1.7033E-05 | 4.6250E-05 | 0.0000E+00 |
| O(30th)/C17 | -1.1728E-06 | 1.2727E-05 | 7.5707E-06 | -6.5481E-05 | 0.0000E+00 |

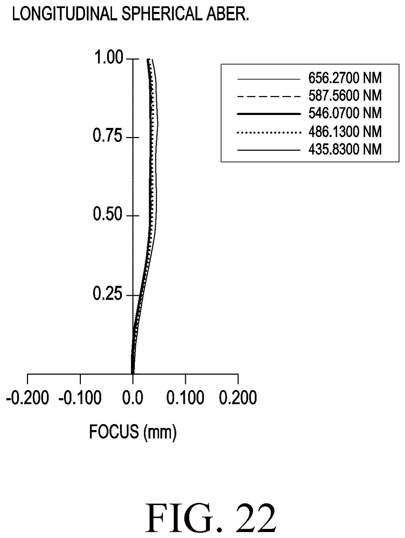

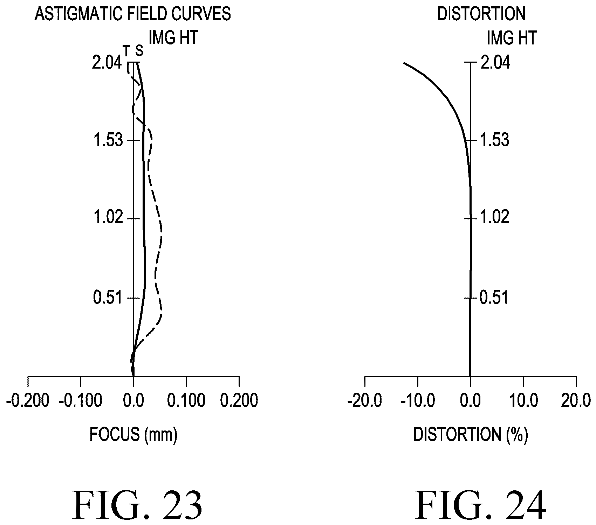

FIG. 21 is a diagram illustrating the lens assembly 800 according to an embodiment of the disclosure. FIG. 22 is a graph illustrating longitudinal spherical aberration of the lens assembly 800 of FIG. 21 according to an embodiment of the disclosure. FIG. 23 is a graph illustrating astigmatism of the lens assembly 800 of FIG. 21 according to an embodiment of the disclosure. FIG. 24 is a graph illustrating distortion of the lens assembly 800 of FIG. 21 according to an embodiment of the disclosure.

The lens assembly 800 of FIG. 21 may achieve a field of view of approximately 123 degrees with a focal length of approximately 2.289mm and an F-number of approximately 2.29. In the lens assembly 800 of FIG. 21, the first lens L1 may have the convex image sensor-side surface S3, and the fourth lens L4 may have a meniscus shape convex towards the image sensor I or 230. In an embodiment, the lens assembly 800 may satisfy at least some of the condition(s) presented regarding the shapes and refractive powers of the aforementioned lens(s) L1, L2, L3, L4, and L5 (e.g., lens surface(s)), the total lens length, the image height, the field of view, the thickness of the third lens L3, and/or the arrangement. In an embodiment, the lens assembly 800 may be manufactured to exemplary specifications illustrated in the following [Table 13] and have aspheric coefficients of [Table 14] and [Table 15].

[Table 13]

| Surface | S8 | S9 | S10 | S11 | S12 |
|---|---|---|---|---|---|
| k(Conic) | -3.4177E+00 | -7.8547E+00 | -1.2509E+00 | -9.6920E+00 | -3.5008E+00 |
| A(4th)/C4 | -1.3656E-01 | 8.9901E-02 | 2.4274E-01 | -5.6090E-01 | -9.8623E-01 |
| B(6th)/C5 | 2.0822E-02 | 1.3108E-02 | 2.8137E-02 | 3.7354E-02 | 1.3269E-01 |
| C(8th)/C6 | -5.4563E-03 | -2.8618E-04 | 1.7488E-02 | -1.1780E-04 | -5.9969E-02 |
| D(10th)/C7 | 9.6988E-04 | -3.3669E-03 | -1.2457E-02 | 9.3136E-04 | 2.4644E-02 |
| E(12th)/C8 | -2.0665E-04 | 1.5093E-03 | 1.4549E-03 | 2.1075E-03 | -1.3556E-02 |
| F(14th)/C9 | 5.4221E-05 | -8.3119E-04 | -9.7291E-04 | -3.5516E-03 | 4.9342E-03 |
| G(16th)/C10 | 4.4993E-05 | 3.4967E-04 | 5.7991E-04 | 2.1684E-03 | -2.1622E-03 |
| H(18th)/C11 | -1.0162E-04 | -2.4820E-04 | -3.0339E-04 | -9.1330E-04 | 1.4113E-03 |
| J(20th)/C12 | 2.0036E-05 | -1.3616E-06 | 9.7445E-05 | 1.0223E-03 | -3.6827E-04 |
| K(22th)/C13 | -1.9909E-05 | -3.3447E-05 | -5.1428E-05 | -4.7752E-04 | 1.8719E-04 |
| L(24th)/C14 | 7.1710E-06 | 2.5193E-05 | -3.2061E-05 | 2.9135E-04 | 9.5243E-05 |
| M(26th)/C15 | -5.8123E-06 | -1.4186E-05 | 2.2720E-05 | -5.5973E-05 | 2.0912E-06 |
| N(28th)/C16 | 5.2730E-06 | -1.6413E-05 | 1.7033E-05 | 4.6250E-05 | 0.0000E+00 |
| O(30th)/C17 | -1.1728E-06 | 1.2727E-05 | 7.5707E-06 | -6.5481E-05 | 0.0000E+00 |

[Table 14]

| Surface | S2 | S3 | S5 | S6 | S7 |
|---|---|---|---|---|---|
| k(Conic) | -3.2333E+01 | -9.7202E+01 | 1.4256E+02 | -3.6424E-01 | -9.8370E+01 |

(continued)

| Surface | S2 | S3 | S5 | S6 | S7 |
|---|---|---|---|---|---|
| A(4th)/C4 | 4.3252E-01 | 2.4418E-01 | -6.5066E-03 | -1.8237E-02 | -1.0529E-01 |
| B(6th)/C5 | -3.5005E-02 | 2.2309E-03 | -3.4414E-04 | -1.3181E-03 | 1.1881E-02 |
| C(8th)/C6 | 7.0000E-03 | 3.1463E-03 | -3.9574E-05 | -2.3636E-03 | -2.9217E-03 |
| D(10th)/C7 | -5.0260E-03 | -2.3235E-03 | 4.2578E-06 | 4.6825E-04 | 1.8479E-03 |
| E(12th)/C8 | -3.2605E-04 | -1.1192E-03 | -1.6200E-06 | 1.7605E-06 | -5.4912E-05 |
| F(14th)/C9 | -4.7537E-04 | -4.9253E-04 | -2.0248E-06 | 7.6908E-05 | 8.8975E-05 |
| G(16th)/C10 | -3.7554E-05 | -1.0558E-04 | 2.5608E-06 | 3.0292E-05 | -4.2633E-05 |
| H(18th)/C11 | 4.5641E-05 | 5.1979E-05 | 9.3255E-07 | 2.0908E-05 | 9.6910E-06 |
| J(20th)/C12 | -3.8397E-05 | 2.2520E-05 | -1.6250E-06 | 1.5822E-05 | 2.0989E-05 |
| K(22th)/C13 | 1.3340E-05 | 7.6360E-06 | -6.6907E-07 | 4.8868E-06 | 1.7174E-05 |
| L(24th)/C14 | -3.5613E-05 | -1.2712E-05 | -8.0147E-07 | 5.9811E-06 | 1.9086E-05 |
| M(26th)/C15 | 3.6826E-06 | -4.5476E-06 | 1.7824E-06 | 4.2945E-06 | 1.1880E-06 |
| N(28th)/C16 | -4.6421E-06 | -7.7401E-07 | 2.4857E-06 | -6.2352E-07 | -2.4331E-06 |
| O(30th)/C17 | 1.2556E-05 | 7.4654E-06 | -3.2543E-07 | -2.9339E-07 | -6.4677E-06 |

[Table 15]

| Surface | S8 | S9 | S10 | S11 | S12 |
|---|---|---|---|---|---|
| k(Conic) | -3.3797E+00 | -9.7103E+00 | -1.2944E+00 | -1.0825E+01 | -3.5988E+00 |
| A(4th)/C4 | -1.3048E-01 | 1.0000E-01 | 2.6506E-01 | -6.0012E-01 | -9.6089E-01 |
| B(6th)/C5 | 1.9304E-02 | 1.1777E-02 | 3.1846E-02 | 3.9253E-02 | 1.2654E-01 |
| C(8th)/C6 | -4.5635E-03 | -1.1680E-03 | 1.6080E-02 | 7.0712E-03 | -6.0018E-02 |
| D(10th)/C7 | 9.3944E-04 | -3.7123E-03 | -1.2226E-02 | 5.8257E-03 | 2.5493E-02 |
| E(12th)/C8 | 2.1739E-05 | 1. 1549E-03 | -9.8415E-04 | 5.1381E-03 | -8.8547E-03 |
| F(14th)/C9 | -1.3005E-04 | -7.6629E-04 | -6.3138E-04 | -2.8155E-03 | 5.6790E-03 |
| G(16th)/C10 | 6.4044E-05 | 1.2988E-04 | 4.4974E-04 | 1.1009E-03 | -1.7322E-03 |
| H(18th)/C11 | -5.1683E-05 | -2.1669E-04 | 1.6342E-04 | -1.0280E-03 | 1.5229E-03 |
| J(20th)/C12 | 5.1962E-05 | 5.5185E-05 | 5.2044E-05 | 6.4715E-04 | -5.8409E-04 |
| K(22th)/C13 | -3.1284E-06 | -4.4815E-05 | 4.7053E-05 | -4.8671E-04 | 2.9281E-04 |
| L(24th)/C14 | 2.8443E-05 | 2.2867E-05 | -6.5217E-05 | 3.2172E-04 | -1.6054E-04 |
| M(26th)/C15 | 2.2587E-06 | -2.8879E-05 | 8.5930E-05 | -1.1549E-04 | -1.3015E-04 |
| N(28th)/C16 | 1.0140E-05 | 1.4635E-05 | -2.9944E-05 | -1.4852E-05 | 6.2164E-06 |
| O(30th)/C17 | -4.5292E-06 | -1.8179E-06 | -6.6074E-06 | 1.4220E-05 | 1.9209E-05 |

According to an embodiment, regarding the conditions presented through [Equations 1 to 6], values calculated from the lens data of the lens assemblies 400, 500, 600, 700, and 800 in FIGS. 5, 9, 13, 17, and/or 21 are illustrated in [Table 16] below. According to an embodiment, the above-described lens assemblies 400, 500, 600, 700, and 800 may have approximately 0.8 or more (e.g., approximately 0.84 or more) as a calculated value according to [Equation 3], while satisfying the condition that the calculated value is approximately 1.0 or less. In an embodiment, when having a field of view of approximately 123 degrees or more, the lens assemblies 700 and 800 may satisfy the condition presented through the following [Equation 8].

[Equation 8]

$$\frac{EFL}{IH \times 2} \leq 0.33$$

Herein, 'effective focal length (EFL)' may represent the effective focal lengths of the lens assemblies 700 and 800.

[Table 16]

|  | Embodiment of FIG. 5 | Embodiment of FIG. 9 | Embodiment of FIG. 13 | Embodiment of FIG. 17 | Embodiment of FIG. 21 |
|---|---|---|---|---|---|
| Equation 1 | 120 | 120 | 120 | 123 | 123 |
| Equation 2 | 2.28 | 2.28 | 2.28 | 2.28 | 2.29 |
| Equation 3 | 0.90 | 0.92 | 0.98 | 0.89 | 0.92 |
| Equation 4 | 1.67 | 1.66 | 1.67 | 1.67 | 1.66 |
| Equation 5 | 19.23 | 20.36 | 19.23 | 19.23 | 20.36 |
| Equation 6 | 0.77 | 0.76 | 0.76 | 0.78 | 0.76 |

As described above, a lens assembly (e.g., lens assembly 210, 400, 500, 600, 700, or 800 in FIG. 2, FIG. 5, FIG. 9, FIG. 13, FIG. 17, and/or FIG. 21) according to embodiment(s) of the disclosure may provide good or improved wide-angle performance while being miniaturized by satisfying at least some of the above-described condition(s). For example, the lens assembly according to the embodiment(s) of the disclosure may implement wide-angle performance of approximately 120 degrees or more, even while having a short total lens length relative to an image height. In an embodiment, the lens assembly may facilitate aberration control or easily secure a marginal light amount ratio, while providing wide-angle characteristics and/or being miniaturized.

The effects obtainable from the disclosure are not limited to those mentioned above, and other unmentioned effects will be clearly understood by those skilled in the art from the above description of the embodiment(s).

As described above, according to an embodiment of the disclosure, a lens assembly (e.g., the lens assemblies 210, 700, and 800 of FIG. 2, FIG. 17, and/or FIG. 21) includes an image sensor (e.g., the image sensor 230 or I of FIG. 2, FIG. 17, and/or FIG. 21), a first lens (e.g., the first lens L1 of FIG. 2, FIG. 17, and/or FIG. 21) disposed first from an object side and aligned with the image sensor on an optical axis (e.g., the optical axis O of FIG. 2, FIG. 17, and/or FIG. 21), wherein the first lens has a negative refractive power and includes a concave object-side surface and a convex image sensor-side surface, a second lens (e.g., the second lens L2 of FIG. 2, FIG. 17, and/or FIG. 21) disposed between the first lens and the image sensor and aligned with the optical axis, wherein the second lens has a positive refractive power and includes a convex object-side surface and a convex image sensor-side surface, a third lens (e.g., the third lens L3 of FIG. 2, FIG. 17, and/or FIG. 21) disposed between the second lens and the image sensor and aligned with the optical axis, wherein the third lens has a negative refractive power and includes a convex object-side surface and a concave image sensor-side surface, a fourth lens (e.g., the fourth lens L4 of FIG. 2, FIG. 17, and/or FIG. 21) disposed between the third lens and the image sensor and aligned with the optical axis, wherein the fourth lens has a positive refractive power and includes a concave object-side surface and a convex image sensor-side surface, and a fifth lens (e.g., the fifth lens L5 of FIG. 2, FIG. 17, and/or FIG. 21) disposed between the fourth lens and the image sensor and aligned with the optical axis, wherein the fifth lens has a negative refractive power and includes a convex object-side surface and a concave image sensor-side surface. The lens assembly may satisfy the following [Conditional Expressions 1, 2, 3, and 4].

[Conditional Expression 1]

$123 <= FOV$

[Conditional Expression 2]

$Fno <= 2.3$

[Conditional Expression 3]

$TTL/(IH*2) <= 1.0$

[Conditional Expression 4]

$$EFL/(IH*2) =< 0.33$$

Herein, 'FOV' is a field of view of the lens assembly, 'Fno' is an F-number of the lens assembly, 'TTL' is a distance from the object-side surface of the first lens to an imaging plane of the image sensor, measured along the optical axis), 'IH' may be an image height of the image sensor, and 'EFL' may be an effective focal length of the lens assembly.

According to an embodiment, the third lens may have an Abbe number of 17 or more and 25 or less.

According to an embodiment, the third lens may have a refractive index of 1.66 or more for light with a wavelength of 587.6nm.

According to an embodiment, the fourth lens may be a convex meniscus towards the image sensor lens and have a refractive index of 1.6 or less for light with a wavelength of 587.6nm.

According to an embodiment, at least one of the first lens or the second lens may have a refractive index of 1.6 or less for light with a wavelength of 587.6nm.

According to an embodiment, the third lens may have a center thickness of 0.15mm or more measured along the optical axis.

According to an embodiment, the fifth lens may include an inflection point disposed on at least one of the object-side surface or the image sensor-side surface thereof.

According to an embodiment, the lens assembly may satisfy the following [Conditional Expression 5].

[Conditional Expression 5]

$$SD/TTL <= 0.9$$

Herein, 'SD' may be a distance from the object-side surface of the first lens to the image sensor-side surface of the fifth lens, measured along the optical axis.

According to an embodiment, the first lens, the second lens, the third lens, the fourth lens, and the fifth lens may be plastic lenses.

According to an embodiment of the disclosure, a lens assembly (e.g., the lens assemblies 210, 400, 500 and 600 of FIG. 2, FIG. 5, FIG. 9, and/or FIG. 13) includes an image sensor (e.g., the image sensor 230 or I of FIG. 2, FIG. 5, FIG. 9, and/or FIG. 13), a first lens (e.g., the first lens L1 of FIG. 2, FIG. 5, FIG. 9, and/or FIG. 13) disposed first from an object side and aligned with the image sensor on an optical axis (e.g., the optical axis O of FIG. 2, FIG. 5, FIG. 9, and/or FIG. 13), wherein the first lens has a negative refractive power and includes a concave object-side surface and a concave image sensor-side surface, a second lens (e.g., the second lens L2 of FIG. 2, FIG. 5, FIG. 9, and/or FIG. 13) disposed between the first lens and the image sensor and aligned with the optical axis, wherein the second lens has a positive refractive power and includes a convex object-side surface and a convex image sensor-side surface, a third lens (e.g., the third lens L3 of FIG. 2, FIG. 5, FIG. 9, and/or FIG. 13) disposed between the second lens and the image sensor and aligned with the optical axis, wherein the third lens has a negative refractive power and includes a convex object-side surface and a concave image sensor-side surface, a fourth lens (e.g., the fourth lens L4 of FIG. 2, FIG. 5, FIG. 9, and/or FIG. 13) disposed between the third lens and the image sensor and aligned with the optical axis, wherein the fourth lens has a positive refractive power and includes a convex object-side surface and a convex image sensor-side surface, and a fifth lens (e.g., the fifth lens L5 of FIG. 2, FIG. 5, FIG. 9, and/or

FIG. 13) disposed between the fourth lens and the image sensor and aligned with the optical axis, wherein the fifth lens has a negative refractive power and includes a convex object-side surface and a concave image sensor-side surface. In an embodiment, the lens assembly may satisfy the following [Conditional Expressions 6, 2, and 3].

[Conditional Expression 6]

$$120 <= FOV$$

[Conditional Expression 2]

$$Fno <= 2.3$$

[Conditional Expression 3]

$$TTL/(IH*2) <= 1.0$$

Herein, 'FOV' may be a field of view of the lens assembly, 'Fno' may be an F-number of the lens assembly, 'TTL' may be a distance from the object-side surface of the first lens to an imaging plane of the image sensor, measured along the optical axis, and 'IH' may be an image height of the image sensor.

According to an embodiment, the third lens may have an Abbe number of 17 or more and 25 or less.

According to an embodiment, the third lens may have a refractive index of 1.66 or more for light with a wavelength of 587.6nm.

According to an embodiment, the lens assembly may further include an aperture stop (e.g., the aperture stop STO of FIG. 2, FIG. 5, FIG. 9, and/or FIG. 13) disposed between the first lens and the second lens.

According to an embodiment, at least one of the first lens or the second lens may have a refractive index of 1.6 or less for light with a wavelength of 587.6nm.

According to an embodiment, the third lens may have a center thickness of 0.15mm or more measured along the optical axis.

According to an embodiment, the fifth lens may include an inflection point disposed on at least one of the object-side surface or the image sensor-side surface thereof.

According to an embodiment, the lens assembly may satisfy the following [Conditional Expression 5].

[Conditional Expression 5]

$$SD/TTL <= 0.9$$

Herein, 'SD' may be a distance from the object-side surface of the first lens to the image sensor-side surface of the fifth lens, measured along the optical axis.

According to an embodiment, the first lens, the second lens, the third lens, the fourth lens, and the fifth lens may be plastic lenses.

According to an embodiment of the disclosure, an electronic device (e.g., the electronic devices 101, 102, 104, and 300 of FIG. 1 or FIG. 3) includes the above-described lens assembly (e.g., the lens assemblies 210, 400, 500, 600, 700, and 800 of FIG. 2, FIG. 5, FIG. 9, FIG. 13, FIG. 17, and/or FIG. 21), and a processor (e.g., the processor 120 of FIG. 1 or the image signal processor 260 of FIG. 2).

According to an embodiment, the processor may be configured to perform a focus adjustment operation and/or a focal length adjustment operation by linearly moving at least one of the first lens, the second lens, the third lens, the fourth lens, and/or the fifth lens with respect to the image sensor along a direction of the optical axis.

While the disclosure has been illustrated and described in relation to an embodiment, it should be understood that the embodiment is presented as an example and does not limit the disclosure. It will be obvious to those skilled in the art that various modifications in form and detail may be made without departing from the overall scope of this disclosure, including the appended claims and their equivalents.

**Claims**

1. A lens assembly (210; 700; 800) comprising:

   an image sensor (230, I);
   a first lens (L1) disposed first from an object (S) side and aligned with the image sensor on an optical axis, wherein the first lens has a negative refractive power and includes a concave object-side surface and a convex image sensor-side surface;
   a second lens (L2) disposed between the first lens and the image sensor and aligned with the optical axis, wherein the second lens has a positive refractive power and includes a convex object-side surface and a convex image sensor-side surface;
   a third lens (L3) disposed between the second lens and the image sensor and aligned with the optical axis, wherein the third lens has a negative refractive power and includes a convex object-side surface and a concave image sensor-side surface;
   a fourth lens (L4) disposed between the third lens and the image sensor and aligned with the optical axis, wherein the fourth lens has a positive refractive power and includes a concave object-side surface and a convex image sensor-side surface; and

a fifth lens (L5) disposed between the fourth lens and the image sensor and aligned with the optical axis, wherein the fifth lens has a negative refractive power and includes a convex object-side surface and a concave image sensor-side surface,

wherein the lens assembly satisfies the following [Conditional Expressions 1, 2, and 3],

[Conditional Expression 1]

$$123 <= FOV$$

[Conditional Expression 2]

$$Fno <= 2.3$$

[Conditional Expression 3]

$$TTL/(IH*2) <= 1.0$$

(where 'FOV' is a field of view of the lens assembly, 'Fno' is an F-number of the lens assembly, and 'TTL' is a distance from the object-side surface of the first lens to an imaging plane of the image sensor, measured along the optical axis).

2. The lens assembly of claim 1, wherein the third lens has an Abbe number of 17 or more and 25 or less.

3. The lens assembly of claim 1 or 2, wherein the third lens has a refractive index of 1.66 or more for light with a wavelength of 587.6nm.

4. The lens assembly of any one of claims 1 to 3, wherein the fourth lens is a convex towards the image sensor meniscus lens and has a refractive index of 1.6 or less for light with a wavelength of 587.6nm.

5. The lens assembly of any one of claims 1 to 4, wherein at least one of the first lens or the second lens has a refractive index of 1.6 or less for light with a wavelength of 587.6nm.

6. The lens assembly of any one of claims 1 to 5, wherein the third lens has a center thickness of 0.15mm or more measured along the optical axis.

7. The lens assembly of any one of claims 1 to 6, wherein the fifth lens includes an inflection point (IP) disposed on at least one of the object-side surface or the image sensor-side surface thereof.

8. The lens assembly of any one of claims 1 to 7, wherein the lens assembly satisfies the following [Conditional Expression 5],

[Conditional Expression 5]

$$SD/TTL <= 0.9$$

(where 'SD' is a distance from the object-side surface of the first lens to the image sensor-side surface of the fifth lens, measured along the optical axis).

9. The lens assembly of any one of claims 1 to 8, wherein the first lens, the second lens, the third lens, the fourth lens, and the fifth lens are plastic lenses.

10. The lens assembly of any one of claims 1 to 9, wherein the lens assembly satisfies the following [Conditional Expression 4],

[Conditional Expression 4]

$$EFL/(IH*2) <= 0.33$$

(where 'IH' is an image height of the image sensor, and 'EFL' is an effective focal length of the lens assembly).

11. The lens assembly of any one of claims 1 to 10, further comprising an aperture stop disposed between the first lens and the second lens.

12. An electronic device (101; 102; 104; 300) comprising:

the lens assembly (210; 400; 500; 600; 700; 800) according to any one of claims 1 to 11;
a processor (120; 260); and
memory (130) storing instructions which, when executed by the processor, cause the electronic device to obtain an object image using the lens assembly.

13. The electronic device of claim 12, wherein the instructions include an instruction which, when executed by the processor, causes the electronic device to perform a focus adjustment operation and/or a focal length adjustment operation by linearly moving at least one of the first lens, the second lens, the third lens, the fourth lens, and/or the fifth lens with respect to the image sensor along a direction of the optical axis.

FIG. 1

EP 4 664 174 A1

200

280

## CAMERA MODULE

| 220 | |
|---|---|
| FLASH | |

210

LENS
ASSEMBLY

| 230 |
|---|
| IMAGE SENSOR |

| 240 |
|---|
| IMAGE STABILIZER |

| 250 |
|---|
| MEMORY |

260

IMAGE SIGNAL
PROCESSOR

# FIG. 2

FIG. 3

FIG. 4

FIG. 5

LONGITUDINAL SPHERICAL ABER.

| | |
|---|---|
| —————— | 656.2700 NM |
| – – – – – | 587.5600 NM |
| —————— | 546.0700 NM |
| ············· | 486.1300 NM |
| —————— | 435.8300 NM |

FOCUS (mm)

FIG. 6

ASTIGMATIC FIELD CURVES

DISTORTION

IMG HT

IMG HT

S T

2.82

2.82

2.12

2.12

1.41

1.41

0.71

0.71

-0.200  -0.100  0.0  0.100  0.200

-20.0  -10.0  0.0  10.0  20.0

FOCUS (mm)

DISTORTION (%)

# FIG. 7

# FIG. 8

FIG. 9

LONGITUDINAL SPHERICAL ABER.

FIG. 10

ASTIGMATIC FIELD CURVES
IMG HT

2.04

1.53

1.02

0.51

-0.200  -0.100   0.0   0.100  0.200
FOCUS (mm)

FIG. 11

DISTORTION
IMG HT

2.04

1.53

1.02

0.51

-20.0  -10.0   0.0   10.0  20.0
DISTORTION (%)

FIG. 12

FIG. 13

FIG. 14

ASTIGMATIC FIELD CURVES

IMG HT

S T

2.29

1.71

1.14

0.57

-0.200 -0.100 0.0 0.100 0.200

FOCUS (mm)

FIG. 15

DISTORTION

IMG HT

2.29

1.71

1.14

0.57

-20.0 -10.0 0.0 10.0 20.0

DISTORTION (%)

FIG. 16

FIG. 17

LONGITUDINAL SPHERICAL ABER.

| | 656.2700 NM |
|---|---|
| | 587.5600 NM |
| | 546.0700 NM |
| | 486.1300 NM |
| | 435.8300 NM |

FOCUS (mm)

FIG. 18

ASTIGMATIC FIELD CURVES

IMG HT

S T ⊤ 2.04

1.53

1.02

0.51

-0.200  -0.100  0.0  0.100  0.200

FOCUS (mm)

## FIG. 19

DISTORTION

IMG HT

2.04

1.53

1.02

0.51

-20.0  -10.0  0.0  10.0  20.0

DISTORTION (%)

## FIG. 20

FIG. 21

LONGITUDINAL SPHERICAL ABER.

FIG. 22

ASTIGMATIC FIELD CURVES

IMG HT

T S

2.04

1.53

1.02

0.51

-0.200  -0.100   0.0   0.100   0.200

FOCUS (mm)

FIG. 23

DISTORTION

IMG HT

2.04

1.53

1.02

0.51

-20.0  -10.0   0.0   10.0   20.0

DISTORTION (%)

FIG. 24

## INTERNATIONAL SEARCH REPORT

| International application No. |
| --- |
| **PCT/KR2024/002750** |

| A. | CLASSIFICATION OF SUBJECT MATTER |
| --- | --- |

**G02B 13/00**(2006.01)i; **G02B 9/60**(2006.01)i; **G02B 1/04**(2006.01)i; **G03B 5/04**(2006.01)i; **G03B 13/36**(2006.01)i; **H04N 23/55**(2023.01)i; **G02B 3/00**(2006.01)i

According to International Patent Classification (IPC) or to both national classification and IPC

| B. | FIELDS SEARCHED |
| --- | --- |

Minimum documentation searched (classification system followed by classification symbols)

G02B 13/00(2006.01); G02B 13/18(2006.01); G02B 9/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 이미지 센서(image sensor), 상고(image height), TTL, FOV, Fno, 굴절력(refractive power), 굴절률(refractive index), 아베수(abbe number)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-044532 A (AAC OPTICS SUZHOU CO., LTD.) 17 March 2022 (2022-03-17)<br>See paragraphs [0001]-[0002], [0019]-[0056] and [0092] and figure 1. | 1-13 |
| A | US 2022-0236530 A1 (LARGAN PRECISION CO., LTD.) 28 July 2022 (2022-07-28)<br>See paragraphs [0182]-[0183] and [0233]-[0235] and figures 9 and 18. | 1-13 |
| A | US 2020-0285026 A1 (LARGAN PRECISION CO., LTD.) 10 September 2020 (2020-09-10)<br>See paragraphs [0176]-[0186] and figure 9A. | 1-13 |
| A | JP 2014-160141 A (KANTATSU CO., LTD.) 04 September 2014 (2014-09-04)<br>See paragraphs [0046]-[0063] and figure 1. | 1-13 |
| A | US 11435553 B2 (GENIUS ELECTRONIC OPTICAL (XIAMEN) CO., LTD.) 06 September 2022 (2022-09-06)<br>See column 7, line 36 - column 8, line 60 and figures 6-8. | 1-13 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **31 May 2024** | **31 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002750**

| Patent document cited in search report | | | Publication date (day/month/year) | Patent family member(s) | | | Publication date (day/month/year) |
|---|---|---|---|---|---|---|---|
| JP | 2022-044532 | A | 17 March 2022 | CN | 111983791 | A | 24 November 2020 |
| | | | | CN | 111983791 | B | 06 April 2021 |
| | | | | JP | 7032850 | B1 | 09 March 2022 |
| | | | | US | 11874442 | B2 | 16 January 2024 |
| | | | | US | 2022-0066154 | A1 | 03 March 2022 |
| | | | | WO | 2022-047986 | A1 | 10 March 2022 |
| US | 2022-0236530 | A1 | 28 July 2022 | CN | 114815139 | A | 29 July 2022 |
| | | | | CN | 114815139 | B | 09 June 2023 |
| | | | | TW | 202229962 | A | 01 August 2022 |
| | | | | TW | I768683 | B | 21 June 2022 |
| US | 2020-0285026 | A1 | 10 September 2020 | CN | 106886081 | A | 23 June 2017 |
| | | | | CN | 106886081 | B | 21 June 2019 |
| | | | | CN | 110119019 | A | 13 August 2019 |
| | | | | CN | 110119019 | B | 11 June 2021 |
| | | | | CN | 110119020 | A | 13 August 2019 |
| | | | | CN | 110119020 | B | 02 February 2021 |
| | | | | CN | 110174750 | A | 27 August 2019 |
| | | | | CN | 110174750 | B | 02 March 2021 |
| | | | | TW | 201721212 | A | 16 June 2017 |
| | | | | TW | I601994 | B | 11 October 2017 |
| | | | | US | 10247911 | B2 | 02 April 2019 |
| | | | | US | 10705316 | B2 | 07 July 2020 |
| | | | | US | 11187873 | B2 | 30 November 2021 |
| | | | | US | 11886038 | B2 | 30 January 2024 |
| | | | | US | 2017-0168264 | A1 | 15 June 2017 |
| | | | | US | 2017-0254980 | A1 | 07 September 2017 |
| | | | | US | 2019-0170970 | A1 | 06 June 2019 |
| | | | | US | 2022-0050265 | A1 | 17 February 2022 |
| | | | | US | 9696519 | B1 | 04 July 2017 |
| JP | 2014-160141 | A | 04 September 2014 | CN | 203606555 | U | 21 May 2014 |
| | | | | JP | 2016-160141 | A5 | 17 March 2016 |
| | | | | JP | 6105317 | B2 | 29 March 2017 |
| | | | | US | 2014-0211328 | A1 | 31 July 2014 |
| | | | | US | 9134511 | B2 | 15 September 2015 |
| US | 11435553 | B2 | 06 September 2022 | CN | 110908072 | A | 24 March 2020 |
| | | | | CN | 117233927 | A | 15 December 2023 |
| | | | | TW | 202117388 | A | 01 May 2021 |
| | | | | TW | I720689 | B | 01 March 2021 |
| | | | | US | 2021-0132334 | A1 | 06 May 2021 |

Form PCT/ISA/210 (patent family annex) (July 2022)